# EUROPEAN PATENT SPECIFICATION

(11) **EP 2 007 222 B1**
(45) Date of publication and mention of the grant of the patent: **03.05.2017**
(21) Application number: 07752913.9
(22) Date of filing: 09.03.2007
(51) Int. Cl.: A23K 50/10, A23K 50/30, A23K 50/60, A23K 50/20, A01K 29/00, A23K 20/111, A23K 50/00

(54) **METHODS AND COMPOSITIONS FOR INCREASED PRODUCTIVITY IN ANIMALS**
VERFAHREN UND ZUSAMMENSETZUNGEN ZUR ERHÖHTEN PRODUKTION BEI TIEREN
PROCÉDÉS ET COMPOSITIONS PERMETTANT UNE PRODUCTIVITÉ ACCRUE CHEZ DES ANIMAUX

(30) Priority: 10.03.2006 US 781523 P
(43) Date of publication of application: 31.12.2008
(73) Proprietor: Archer Daniels Midland Company, Decatur, IL 62526 (US)
(72) Inventor: BLOCK, Stephanie, S., Decatur, IN 46733 (US); CECAVA, Michael, J., Decatur, IN 46733 (US); DOANE, Perry, H., Decatur, IN 46733 (US); FRANKLIN, Mark, A., Charlotte, TN 37036 (US); KAMEL, L., Christopher, Miami Playa (ES); PYATT, Nathan, A., Decatur, IN 46733 (US); YANG, Hong, Peoria, IL 61615 (US)
(74) Representative: dompatent von Kreisler Selting Werner - Partnerschaft von Patent- und Rechtsanwälten mbB
(86) International application number: PCT/US2007/006247
(87) International publication number: WO 2007/106452

(56) References cited:
- WO-A-93/14638
- WO-A-99/59430
- WO-A-2006/081588
- US-A- 5 879 696
- ORNDORFF B W ET AL: "Comparison of prophylactic or therapeutic dietary administration of capsaicin for reduction of Salmonella in broiler chickens" AVIAN DISEASES, vol. 49, no. 4, December 2005 (2005-12), pages 527-533, XP008080490 ISSN: 0005-2086
- PLATEL K ET AL: "INFLUENCE OF DIETARY SPICES OR THEIR ACTIVE PRINCIPLES ON DIGESTIVE ENZYMES OF SMALL INTESTINAL MUCOSA IN RATS" INTERNATIONAL JOURNAL OF FOOD SCIENCES AND NUTRITION, CARFAX PUBLISHING LTD, GB, vol. 47, no. 1, 1996, pages 55-59, XP008016081 ISSN: 0963-7486

## Description

### TECHNICAL FIELD

The present disclosure relates generally to animal feed compositions, animal feed supplements, and methods for increasing animal production and performance. Methods for improving performance, including reproductive performance and lactation performance, are described.

### BACKGROUND

Animal productivity and performance include the ability for livestock and other commercially raised animals to survive and thrive under conditions where maximum economic benefit is achieved. For example, efficient and economical animal production depends, in part, on a continuous turnover of animals. Thus, modern animal production relies upon efficient reproductive function. For example, in most livestock industries one goal is to produce as many healthy and robust offspring as possible.

Alternatively or additionally, a second goal may be to maximize commercial production of products that are produced by, or derived from, the animals. For example, with dairy cattle, a goal may be to increase lactation performance. For animals raised for the commercial production of meat, such as beef cattle or swine, a goal may be to maximize the production of quality meat while minimizing the cost, such as, feed costs, associated with raising the cattle.

Many different techniques have been employed to help optimize performance. For example, advances in genetic selection and nutritional programs have improved the potential reproductive performance of monotocous and polytocous species. Improved reproductive performance may be particularly important in certain areas of the livestock industry where reproductive efficiency and subsequent growth rate may be primary determinants in whether a system is sustainable and profitable. Efficient reproductive performance provides a constant supply of animals that may be used to replace the animals that are sold to market or otherwise removed from production. The replacement animals should be as healthy as possible to allow them to produce near their genetic potential with minimal cost or intervention.

Some of the greatest advances in reproductive performance have come in the swine industry. This may be due to the fact that profitability of a swine operation is based largely on the number of healthy pigs weaned per sow per year. Other species have experienced lesser improvements in reproductive efficiency due to the greater diversity of factors contributing to economic success. However even in these species, improved reproductive performance can have a major economic benefit. For example, for dairy cattle, it is estimated that each non-pregnant day beyond 60 days in lactation costs the farmer greater than $2.00 per day in lost productivity from milk production alone. In beef cattle, herds are generally arranged to accommodate fall-calving or spring-calving. If a cow is not pregnant, it is usually culled from the herd resulting in unnecessary feed expenditures for the period when the cow was in the herd and not pregnant or nursing a calf.

Early gestation is a critical period for determining the success and survivability of the embryo, for example, during embryo implantation. For polytocous species, it is desirable for a large number of embryos to implant. For example, in commercial swine operations, selection of the more prolific sows has resulted in sows capable of producing in excess of 15 piglets per litter. However, under many conditions, uterine capacity and the number of embryos released during ovulation are oftentimes in excess of the number of piglets ultimately born and weaned. The reduction in piglets born or weaned may be due, in part, to a high rate of early embryonic loss or failure during implantation. Early embryonic loss causes a reduction in the number of viable offspring produced over the lifetime of an animal and, thus, an overall reduction in productivity.

Lactation is also an important period for the development of healthy, successful, animals. For example, in swine, piglet mortality during the suckling period averages 12% of all live-born piglets failing to survive until weaning. Improved lactation performance may have an effect on the overall survivability of the offspring and may also contribute to the continued health of the parent. Immune system development and immune protection of the developing offspring is dependent, at least in part, on the acquisition of immunoglobulins from the parent during suckling.

In addition, high milk output during lactation may ensure higher weights at weaning, greater energy reserves, and greater resistance to colder ambient temperatures. For the parent, lactation can result in weight loss and lowered health/energy reserves as nutrients are passed from the mother to offspring. Improved lactation performance may reduce weight loss and increase health/energy reserves in the parent.

Alternatively, production and/or performance in animals may be affected by environmental conditions. For example, during specific weather conditions, such as hot and humid weather during the summer months, production and/or performance may not be optimal since the systemic body temperature of the animal may be increased above normal levels. This decrease in production and/or performance may be countered by providing a cooling mechanism for the animal. For example, providing shade to animals may help reduce body temperature and thereby improve performance. However, it is not always possible to provide shade to aid in the reduction of body temperature. For example, cattle in open prairie pastures or in feedlot situations may not have ready access to shade.

Thus, further increases in production and performance in commercially raised animals is desired for the sustained economic viability of the livestock industry. Further, methods for increasing production/performance for reproduction and lactation are also desired.

### SUMMARY

The present invention relates to the non-medical use of a capsaicin according to claims 1, 8, 9 and 10. The present disclosure relate to methods for feeding animals, such as, a gestating animal or lactating animal. Other embodiments of the disclosure relate to methods for feeding an animal, such as a bovine or a porcine.

One embodiment of the disclosure includes methods for feeding a non-avian monogastric animal. The method comprises mixing a capsaicin product with an animal feed product, thus producing an animal feed composition or an animal feed supplement; and feeding the animal feed composition or the animal feed supplement to the non-avian monogastric animal.

Still other embodiments of the disclosure include methods for feeding one or more animal selected from the group consisting of a dairy cow, a lactating bovine, a steer calf, and an ovine. The method comprises mixing a capsaicin product with an animal feed product, thus producing a feed composition or a feed supplement; and feeding the feed composition or the feed supplement to the animal. The animal feed product may be selected from the group consisting of feed matter, a mineral, a vitamin, an amino acid, an antibiotic, a plant extract, a plant botanical, a sugar alcohol, and combinations of any thereof. Other embodiments of the disclosure include methods of feeding an animal. The method comprises feeding an animal feed comprising a capsaicin product to an animal selected from the group consisting of a lactating sow, a gestating sow, a piglet, a dairy cow, a lactating bovine, a steer calf, a gestating ewe, a lactating ewe, and a lamb.

Still other embodiments of the disclosure include a system comprising: a pasture, a feedlot, or a barn; at least one animal; a feed composition or a feed supplement comprising a capsaicin product; and an apparatus for feeding the feed composition or the feed supplement to the at least one animal.

Further embodiments of the disclosure include a system for producing an animal feed composition or an animal feed supplement. The system comprises: a source of a capsaicin product; a source of a feed product; a device for mixing the capsaicin product with the feed product, thus forming the animal feed composition or the animal feed supplement; and a device for placing the animal feed composition or the animal feed supplement into a container configured for shipping the animal feed composition or the animal feed supplement.

Still further embodiments of the disclosure include a swine feed comprising a capsaicin product, at least one mineral, animal feed dry matter, and an amino acid.

Other embodiments of the disclosure include a bovine feed comprising a capsaicin product, animal feed dry matter, and a plant extract.

Still other embodiments of the disclosure include methods for feeding an animal. The method comprises mixing a capsaicin product with an animal feed product, thus producing an animal feed composition or an animal feed supplement; and feeding the animal feed composition or the animal feed supplement to the animal. The animal feed product may be selected from the group consisting of feed matter, a mineral, a vitamin, an amino acid, an antibiotic, a plant extract, a plant botanical, and combinations of any thereof. The animal may be one or more of a neonatal animal, a gestating animal, a lactating animal, a growing animal, a fattening animal, and a mature animal.

### DESCRIPTION OF THE FIGURES

The various embodiments of the disclosure may be better understood with reference to the following figures.

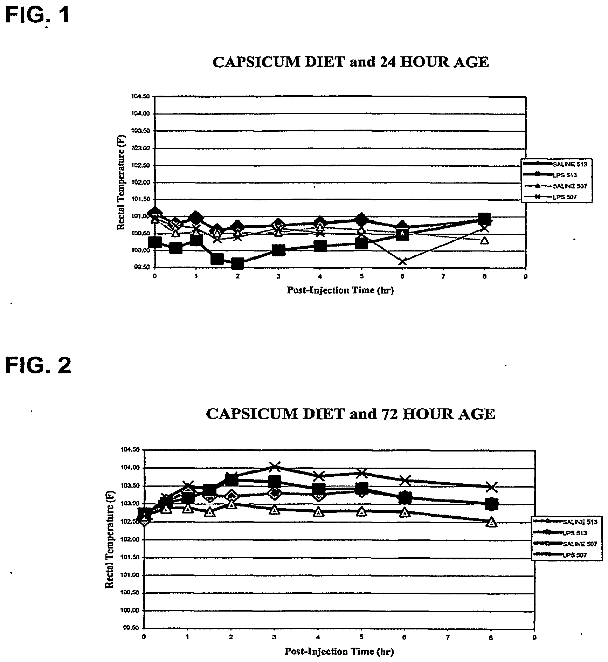

FIG. 1 illustrates the effect on rectal temperature for lipopolysaccharide challenge during first 24 hours of life for piglets.
FIG. 2 illustrates the effect on rectal temperature for lipopolysaccharide challenge during first 72 hours of life for piglets.
FIG. 3 illustrates rectal temperature of dairy cattle fed capsaicin product containing diet during heat stress conditions.

### DETAILED DESCRIPTION

The present disclosure relates generally to the use of animal feed compositions and animal feed supplements and methods for increasing animal production and/or performance according to claims 1, 8, 9 and 10. Methods for improving performance, including, for example, reproductive performance and lactation performance, are described. More specifically, feeding animals an animal feed composition or animal feed supplements comprising a capsaicin product have been found to increase productivity and/or performance in animals. For example, at least one of reproductive performance and productivity, lactation performance, and resistance to heat stress have been increased in animals fed a diet comprising one or more capsaicin products.

The present disclosure describes several different features and aspects of the invention with reference to various exemplary non-limiting embodiments. It is understood, however, that the invention embraces numerous alternative embodiments, which may be accomplished by combining any of the different features, aspects, and embodiments described herein in any combination that one of ordinary skill in the art would find useful.

Various embodiments of the present disclosure are directed toward methods of improving performance and productivity, such as, but not limited to, reproduction performance or lactation performance, in animals, such as, livestock and other commercially raised animals, by feeding the animals an animal feed composition or animal feed supplement comprising a capsaicin product. Methods and systems of feeding an animal comprising feeding the animal an animal feed composition or animal feed supplement comprising the capsaicin product are also disclosed. Animals that may be fed the animal feed compositions or animal feed supplements of the present disclosure include non-avian monogastric and polygastric animals. Non-limiting species of animals that may be fed the animal feed compositions or animal feed supplements include porcine species (e.g., swine) and bovine species. Other non-limiting examples of species that may benefit from the animal feed compositions or animal feed supplements include artiodactyla, such as, cervines including elk, deer, and the like, equines, ovines, and caprines. Still other non-limiting examples of species include other commercially raised animals such as mink, rabbits, llama, and alpaca; poultry and fowl, such as chickens, turkeys, geese, pheasants, and ducks; ratites, such as emus and ostrich; pets, such as canines and felines; fish; and crustaceans.

As discussed herein, animal production may depend, at least in part, on a continuous turnover of animals. Reproductive efficiency and subsequent growth rate are among the primary determinants in whether a system is sustainable. Successful reproduction provides a constant supply of animals to replace the animals that are sold to market or otherwise removed from production. Replacement animals should be as healthy as possible which will allow them to produce near their genetic potential with minimal intervention. The provision of nutrients to the growing fetus is critical for the birth of robust offspring: While maternal nutrition may be important for a fetal nutrient supply, ultimately, nutrients are provided to the growing fetus via the maternal blood flow to the uterus. Placental transfer of nutrients is dependent upon available nutrients delivered through the maternal bloodstream. When maternal nutrition is adequate, improved blood flow to the uterus may result in more viable offspring.

Two critical stages of development may be affected by nutrient supply. Initially, the first several weeks of gestation, such as, at least a portion of the first four weeks of gestation, determine whether the embryo(s) implants and generates a successful pregnancy. In monotocous species, this period determines whether the fertilized embryo will result in a successful pregnancy. This same period in polytocous species, such as, for example, swine, determines how many embryos will implant and develop. Additional effects of blood flow on fetal growth are believed to be minimal until the final 1/3 of gestation, such as the last four weeks of gestation. However, during this final period the majority of fetal growth typically occurs. Oftentimes, growth may be limited by nutrient supply and larger animals may result when blood flow to the uterus is improved during the final weeks of gestation.

In some embodiments, the present invention may help animals support the nutritive needs of the fetus(es) during gestation. Early embryonic loss causes a reduction in the number of viable offspring produced over the lifetime of an animal. Increased blood flow to the uterine tissues may improve the likelihood of embryo/fetus survivability. As gestation proceeds, insufficient blood flow may limit the growth of near-term offspring. It is well-documented that small offspring such as runts are less likely to thrive. Increases in nutrient availability may allow the offspring to grow at rates close to their genetic potential, thus reducing the number of runts, stillborns, or mummies, i.e., offspring that are not fully formed during gestation. Well-developed offspring will then be more adequately prepared for birth and early life stresses.

According to the variouspresent disclosure, the use of a capsaicin product in an animal feed composition or animal feed supplement may aid in the maintenance of desirable blood flow to reproductive tissues. The consumption of capsaicin or capsaicin products and circulatory appearance may lead to increased vasodilation with a pregnancy-specific enhancement in reproductive tissues; specifically the uterus and/or placenta.

Capsaicin is the chemical compound present in peppers that is responsible for the "heat" of those peppers and is known to work as a vasodilator (Zygmunt, P.M., Petersson, J., Andersson, D.A., Chuang, H., Sogard, M., DiMarzo, V., Julius, D., Hogestatt, E.D., "Vanilloid receptors on sensory nerves mediate the vasodilator action of anandamide," Nature, 1999 July 29;400(6743):452-457). The term "capsicum", as used herein, includes an extract of any of the plants of the Genus *Capsicum* sp. which includes peppers such as, but not limited to, *Capsicum anuum*, *C. frutescans, C. baccatum, C. pubescens, and C. chinense.* Capsicum contains 2% to 20% (w/w) natural capsaicin and capsaicinoids. Higher concentration percentages may be obtained by enhancing capsicum with synthetic capsaicin. According to various embodiments of the present disclosure, the animal feed compositions and animal feed supplements described herein comprise a capsaicin product comprising one or more of capsaicin, dihydrocapsaicin, capsaicinoids, vanilloids, capsicum, macerated hot peppers, ground hot peppers, hot pepper extract, other capsaicin or capsicum containing plant materials, an encapsulated or coated capsaicin product, and combinations of any thereof.

In certain embodiments, the capsaicin product may be coated or encapsulated. The coating or encapsulation may be performed such that the coated or encapsulated capsaicin product comprises a micro-sized spherical particle. For example, according to certain embodiments of the disclosure, the coated or encapsulated capsaicin product may comprise micro-sized spherical particles having a size range of 125 microns to 400 microns. The material used to coat or encapsulate the capsaicin product may comprise a digestible matrix that is degraded in the digestive and/or intestinal tract of an animal after the composition is orally consumed by the animal. In certain embodiments of the disclosure, the material used to coat or encapsulate the capsaicin product may comprise a hydrogenated vegetable oil matrix, a hydroxypropyl methyl cellulose, or a combination thereof. According to other embodiments of the disclosure, the capsaicin product may be coated or encapsulated by coating or encapsulating the capsaicin product with a hydrogenated vegetable oil matrix or granulated with the hydroxypropyl methyl cellulose. The coating or encapsulation of the capsaicin product may enable a manufacturer or user of an animal feed composition or animal feed supplement comprising the capsaicin product to handle the capsaicin product or animal feed composition/supplement more safely since certain capsaicin products that may be used in the various embodiments of the animal feed compositions or animal feed supplements, such as, for example, capsaicin or capsicum, may be an irritant to persons handling the capsaicin product or feed compositions/supplements. In other embodiments, the coating or encapsulation of the capsaicin product may make the resulting animal feed composition or animal feed supplement more palatable to an animal consuming the animal feed composition/supplement.

The present disclosure provides for a method for feeding an animal comprising: mixing a capsaicin product with an animal feed product, thus producing an animal feed composition or an animal feed supplement; and feeding the animal feed composition or the animal feed supplement to the animal. In one embodiment, the animal may be a non-avian monogastric animal. As used herein, "non-avian monogastric animals" include non-avian animals having a single stomach, such as, but not limited to, equines, porcines (i.e., "swine"), felines, canines, and rabbits. In other embodiments of the disclosure, the animal may be selected from the group consisting of a neonatal animal, a gestating animal, a lactating animal, a growing animal, a fattening animal, and/or mature animal. The animal feed product may be selected from the group consisting of feed matter, a mineral, a vitamin, an amino acid, an antibiotic, a plant extract, a plant botanical, and combinations of any thereof. In other embodiments the animal feed product may comprise a sugar alcohol. As used herein, the term "animal feed composition" includes a composition that may be fed directly to an animal to provide the animal's complete nutritional requirements. As used herein, the term "animal feed supplement" includes a composition that may be fed to an animal in addition to an animal's normal feed regimen to supplement the nutritional content of the normal feed regimen, for example, to provide for the animals nutritional requirements.

According to various embodiments, the animal feed composition or the animal feed supplement may comprise the capsaicin product in an amount sufficient to observe the desired response. For example, according to certain embodiments, the animal feed composition or the animal feed supplement may comprise 0.0001 % to 1.0% by weight of the capsaicin product.

As will be understood by one having ordinary skill in the art, the desired concentration of the capsaicin product in the animal feed composition or the animal feed supplement may be dependant on a variety of factors including, but not limited to, the species of animal, the type of animal feed, the particular capsaicin product used, the age of the animal, the weight of the animal, the number of litters that the animal has previously birthed (also known as the "parity of the animal"), and the like. In particular, the amount of capsaicin product added to the animal feed compositions or the animal feed supplements may depend on the amount of the animal feed composition or the animal feed supplement consumed by the animal, for example, the amount consumed during a 24 hour period (i.e., amount consumed per day). Thus, according to certain embodiments, the capsaicin product may be added to the animal feed compositions or the animal feed supplements in an amount to provide a certain daily amount of capsaicin product consumed by the animal (typically measured in milligrams of capsaicin product per head of animal per day, or mg/head/day). For example, in feeding swine, such as, a gestating sow or a lactating sow, the capsaicin product may be added to the animal feed compositions or the animal feed supplements in an amount sufficient to feed the swine 1 mg/head/day to 100 mg/head/day. For bovines, such as a gestating cow or lactating cow, the capsaicin product may be added to the animal feed compositions or the animal feed supplements in an amount sufficient to feed the bovine 10 mg/head/day to 400 mg/head/day of the capsaicin product.

Feeding the animal feed compositions or the animal feed supplements of the present disclosure to the gestating animal may occur at any time before, during, or after the gestation period of the animal. According to certain embodiments, the animal feed compositions or the animal feed supplements may be fed to the gestating animal during at least a portion of the first four weeks of the gestation period of the animal. According to other embodiments, the animal feed compositions or the animal feed supplements may be fed to the gestating animal during at least a portion of the last four weeks of the gestation period of the animal (i.e, prior to birth). According to further embodiments, the animal feed compositions or the animal feed supplements may be fed to the gestating animal during the entire gestation period of the animal. According to specific embodiments, the gestating animal may be a swine, wherein the animal feed compositions or the animal feed supplements are fed to the swine for at least a portion of the first four weeks of gestation of the swine.

Consumption of the animal feed composition or the animal feed supplement during at least a portion of the first four weeks of gestation may increase, for example, one or more of: the number of eggs released during ovulation, the success of implantation of the fertilized egg on the uterine lining, the number of fertilized eggs that successfully implant on the uterine lining, and the reduction of embryonic loss during gestation.

Alternatively or in addition to feeding the animal feed composition or the animal feed supplement comprising a capsaicin product to a gestating animal, the animal feed composition or the animal feed supplement may be fed to a lactating animal. When fed to a lactating animal, the animal feed composition or the animal feed supplement comprising the capsaicin product may enhance lactation performance, such as, for example, enhancing milk production, decreasing weight loss of the lactating animal during lactation, increasing the daily mass intake of the lactating animal, and/or increasing a milk fat content of milk.

According to various embodiments, the gestating animal or lactating animal may be a monotocous species or a polytocous species. As used herein, the term "monotocous species" includes a species of animal that typically gives birth to a single offspring per pregnancy, such as, bovines, equines, ovines, caprines, cervines and the like. Monotocous may include species that typically give birth to a single offspring but, occasionally give birth to two offspring during a single gestation period (i.e., "twins"). As used herein, the term "polytocous species" includes a species of animal that typically gives birth to multiple offspring (i.e., a "litter" of offspring) per pregnancy, such as, porcines, canines, felines, and the like.

According to embodiments wherein the animal is a monotocous species, the animal feed compositions or the animal feed supplements may be capable of at least one of increasing blood flow to reproductive tissues of the animal, increasing lactation performance of the animal, decreasing weight loss of the animal during lactation, increasing weight gain in an offspring, reducing heat stress of the animal, reducing the length of time to return to estrus, and increasing survivability of the offspring, as compared to a gestating animal or lactating animal which is not fed the animal feed compositions or the animal feed supplements, or is fed an animal feed composition or animal feed supplement which does not comprise the capsaicin product.

According to embodiments wherein the animal is a polytocous species, the animal feed composition or the animal feed supplement may be capable of at least one of increasing blood flow to reproductive tissues of the animal, increasing lactation performance of the animal, decreasing weight loss of the animal during lactation, increasing the number of viable offspring in a litter, increasing weight gain in an offspring, increasing a total litter weaning weight, decreasing heat stress of the animal, reducing the length of time to return to estrus, and increasing survivability of the offspring, as compared to a gestating animal or lactating animal which is not fed the animal feed compositions or the animal feed supplements, or is fed an animal feed composition or animal feed supplement which does not comprise the capsaicin product.

Increasing blood flow to reproductive tissues may comprise increasing blood flow to the uterine lining of the animal and/or increasing blood flow to the placental tissues of the animal. Increasing lactation performance may comprise one or more of increasing milk production (i.e., the weight or volume of milk produced per day), increasing the content of milk fat in the milk, and increasing the daily mass intake of the lactating animal. Decreasing the length of time for return to estrus means that the time where the animal is neither gestating nor nursing is minimized, thereby increasing the economic production of the animal. Decreasing heat stress in the gestating animal or lactating animal may result in increased production and performance.

During lactation, a process of producing milk from the mammary glands, animals typically lose weight, for example, backfat in lactating sows, due to the animal's nutritional intake not matching the nutritional depletion associated with lactation. Consumption of the animal feed compositions or the animal feed supplements of the present disclosure may decrease the amount of weight lost during lactation. For example, loss of backfat in lactating sows is typically observed while nursing a litter of piglets. Consumption by sows of the animal feed compositions or the animal feed supplements according to the present disclosure may reduce the amount of weight, which may be quantified, for example, by measuring the amount of backfat lost during lactation.

Offspring of animals that have consumed the animal feed compositions or the animal feed supplements of the present disclosure during the gestation period and/or during the lactation period may show increased weight gain and/or increased survivability as compared to offspring of animals not fed the animal feed compositions or the animal feed supplements or are fed an animal feed composition or an animal feed supplement that does not comprise the capsaicin product. For example, piglets born to sows fed the animal feed compositions or the animal feed supplements may show improved weight gain during the first year of life compared to piglets of sows fed a conventional diet. Calves born to cows fed the animal feed compositions or the animal feed supplements may show improved weight gain during the first three years of life compared to calves of cows fed a conventional diet.

The methods of the present disclosure may include feeding the animal feed compositions or the animal feed supplements to an animal, wherein the animal is of a species selected from the group consisting of bovines, equines, porcines, ovines, cervines, felines, canines, and caprines. According to certain embodiments, the animal may be a porcine, such as, a swine.

According to other embodiments, the animal may be a bovine, such as, a cow, for example, a lactating bovine, such as a dairy cow, beef cattle, a steer calf, or a pre-ruminant calf. As discussed herein, the animal may be fed the animal feed composition or the animal feed supplement during gestation, for example, during the entire gestation period, during at least a portion of the first 4 weeks of gestation, and/or during at least a portion of the last 4 weeks of gestation. Alternatively or in addition, the animal may be fed the animal feed composition or the animal feed supplement during lactation.

The animal feed composition or animal feed supplement may be useful for game animal feeds. According to one embodiment of the disclosure, the animal may be a cervine, such as, for example a cervine with antlers. According to these embodiments of the disclosure, consumption of the animal feed composition or animal feed supplement comprising the capsaicin product may increase blood flow to the felt of the antlers. Increased blood flow to the antler felt may aid in antler growth, thereby resulting in animals with larger antlers as compared to cervines that do not consume the animal feed composition or animal feed supplement comprising the capsaicin product.

The present disclosure discloses methods for feeding a bovine. The methods, according to these embodiments of the disclosure, comprise: mixing a capsaicin product with an animal feed product, thus producing a feed composition or a feed supplement; and feeding the feed composition or feed supplement to a bovine. According to certain embodiments of the disclosure, the bovine may be selected from the group consisting of a lactating bovine, a gestating bovine, a dairy cow, bovine bull, a beef cattle, a pre-ruminant calf, a bull calf, a heifer calf, and a steer calf. The animal feed product may be selected from the group consisting of feed matter (such as feed dry matter), a mineral, a vitamin, an amino acid, an antibiotic, a plant extract, a plant botanical, a sugar alcohol, and combinations of any thereof.

When the animal is a bovine, the bovine may be amassed in at least one of a feedlot, a pasture, a barn or other farm structure, and a dairy farm. According to certain embodiments, the feed compositions or the feed supplements may be capable of at least one of increasing the average daily gain in weight of the bovine as compared to a bovine which is not fed the feed compositions or the feed supplements of the present disclosure or is fed a feed composition or a feed supplement which does not comprise the capsaicin product. As used herein, "feed efficiency" includes a measure of the amount of weight gained or milk produced by the animal compared to the amount of feed consumed by the animal over a period of time, such as, per day. For example, feed efficiency may be measured by dividing the amount of weight gained per day by the weight of feed consumed per day and multiplying by 100.

Heat stress among animals, for example, bovines, is known to cause a reduction in productivity and performance. Heat stress occurs, for example, during times of hot, humid, weather. Animals suffering from heat stress have higher body temperatures than animals not subject to heat stress. As body temperature of the animal increases, the animal's system may commit resources to reducing the temperature. These resources may then be unavailable for other vital functions, such as, for example, health maintenance. Reducing heat stress may increase health, performance, and/or productivity of the animal. The various methods of the present disclosure may reduce heat stress by improving thermal regulation of the animal. For example, as discussed herein, capsaicin is a vasodilator and therefore may help in increasing blood circulation and blood flow to the skin of the animal, thereby increasing heat dissipation and improving the natural cooling mechanisms of the animal.

According to other embodiments, the feed compositions or the feed supplements may be fed to a lactating bovine. Consumption of the feed compositions or the feed supplements by the lactating bovine may improve lactation performance of the lactating bovine. According to these embodiments, the feed compositions or the feed supplements may be capable of at least one of increasing milk production and/or increasing a milk fat content of milk, , as compared to a lactating bovine which is not fed the feed compositions or the feed supplements according to the present disclosure or is fed a feed composition or a feed supplement which does not comprise the capsaicin product.

According to certain embodiments where the feed compositions or the feed supplements are fed to an animal that is a lactating or growing bovine, the method may further comprise mixing a botanical compound capable of increasing milk production of the bovine with the feed compositions or the feed supplements. For example, other botanical compounds, such as, for example, cinnamaldehyde and/or eugenol, may be mixed with the bovine feed compositions or the bovine feed supplements of the present invention.

When the animal is a bovine, the feed compositions or the feed supplements of the various methods herein may comprise from 0.0001% to 1.0% by weight of the capsaicin product. According to certain embodiments of the disclosure, the capsaicin product is added to the feed compositions or the feed supplements in an amount sufficient so that it is fed to the bovine in an amount of 10 mg/head/day to 400 mg/head/day.

According to other embodiments of the present disclosure wherein the animal is a bovine, the feed compositions or the feed supplements may be fed to a dairy cow. The feed compositions or the feed supplements may be capable of at least one of increasing a weight of milk produced per day, increasing a milk fat content of milk as compared to dairy cattle which are not fed the feed compositions or the feed supplements or are fed a feed composition or a feed supplement which does not comprise the capsaicin product.

According to other embodiments, any of the use of a capsaicin product in the preparation of an animal feed composition or animal feed supplement for feeding an animal or feeding a bovine described herein may further include the steps of placing the feed composition or the supplement in a container which container may be configured for shipping. The methods may further comprise associating indicia with the container, such as, for example, placing graphical, written, or numerical indicia on the container. The indicia may be capable of describing the contents of the container, designating the producer of the contents, and/or directing an end user, such as, for example, a livestock producer, on how to administer the feed composition or feed supplement to the animal or bovine. According to other embodiments of the disclosure, the methods may further comprise shipping the container containing the feed composition or feed supplement. Any conventional method of shipping may be used, such as, for example, shipping by truck, train, ship, or plane. Still other embodiments may include various combinations of placing the feed composition or supplement in a container, associating indicia with the container, and shipping the container containing the feed composition or supplement.

The feed compositions or feed supplements may be in any acceptable formulation. For example, the embodiments of the disclosure of the feed supplements within the present disclosure may be fed, for example, as supplements to grazing mammals or may be incorporated into commercially available feeds. When used as a supplement, the compositions of the present disclosure may be ingested by the mammals prior to, during or after grazing or consumption of commercially available feeds.

The physical form of the various non-limiting embodiments of the compositions and supplements within the present disclosure may be any formulation known in the feed art. Suitable formulations include, but are not limited to, feed supplement, feed additive, top-dress, pill, pellet, block, cube, liquid, an agglomeration, mineral, meal, cooked tub, and/or pressed tub formulations. In one non-limiting embodiment, the physical formulation is a dry, free-flowing loose pellet formulation that is suitable for direct consumption as a feed composition, feed supplement or as a feed additive. In another non-limiting embodiment, the physical formulation is a pressed tub formulation that is suitable for direct consumption by mammals foraging at pasture, for example, to supplement the nutritional requirements of the animal at pasture.

In yet another embodiments, the feed composition comprising the capsaicin product may be admixed with a compound capable of enhancing milk production in an animal, including, but not limited to, a bovine or porcine. For example, when enhanced milk production is desired, the capsaicin product admixed with the compound capable of enhancing milk production may be produced and fed to the animals. Compounds capable of enhancing milk production, include, but are not limited to, amino acids (i.e., lysine, threonine, or beta-hydroxymethionine), sugar alcohols or anhydrosugar alcohols (i.e., sorbitol, glycerol, xylitol, mannitol, and the like). The amino acids may be in liquid, free amino acid, or amino acid salt form.

The present disclosure provides a system for feeding an animal. The system may comprise: at least one of a pasture, a feedlot and a barn or other farm structure, such as, a farrowing house; at least one animal; an feed composition or an feed supplement comprising a capsaicin product; and an apparatus for feeding the feed composition or the feed supplement to the at least one animal.

According to other embodiments of the disclosure, the present disclosure provides a system for producing an animal feed composition or animal feed supplement. The system may comprise: a source of a capsaicin product; a source of a feed product selected from the groups consisting of a feed matter, a mineral, a vitamin, an amino acid, an antibiotic, a plant extract, a plant botanical, a sugar alcohol, and combinations of any thereof; a device for mixing the capsaicin product with the feed product, thus forming the animal feed composition or animal feed supplement; and a device for placing the animal feed composition or animal feed supplement into a container configured for shipping the animal feed composition or the animal feed supplement.

The present disclosure include a swine feed comprising a capsaicin product, at least one mineral, animal feed dry matter, and an amino acid. According to certain embodiments of the disclosure, the swine feed comprising the capsaicin product may not include other plant botanicals or extracts.

Further the present disclosure includes a bovine feed comprising a capsaicin product, animal feed dry matter, and a plant extract. According to certain embodiments, the plant extract may be selected from the group consisting of cinnamaldehyde and other extracts from *Cinnamomum verum*, eugenol and other extracts from cloves and clove oil, and combinations of any thereof. According to certain embodiments of the disclosure of the swine feeds and the bovine feeds, the feed compositions may further comprise a compound for enhancing milk production. Examples of compounds for enhancing milk production may include, but are not limited to, amino acids (i.e., lysine, threonine, or beta-hydroxymethionine), sugar alcohols or anhydrosugar alcohols (i.e., sorbitol, glycerol, xylitol, mannitol, and the like). Other embodiments of the disclosure of the swine feeds and the bovine feeds may further include a sugar alcohol. According to other embodiments of the disclosure, the swine feeds and the bovine feed may further comprise a fermentation biomass, such as, for example, a yeast, a yeast cream, a yeast biomass, a lysine biomass, a lactic acid fermentation biomass, a citric acid presscake, an ethanol presscake, a bacterial fermentation biomass, a brewer's yeast biomass, a baker's yeast biomass, and combinations of any thereof. According to other embodiments of the disclosure, the swine feeds and the bovine feed my further comprise acidulants. Acidulants suitable for using in specific embodiments include organic acids and inorganic acids. Organic acids suitable for use within the present disclosure include, but are not limited to, acetic acid, ascorbic acid, citric acid, aconitic acid, malic acid, fumaric acid, succinic acid, lactic acid, malonic acid, maleic acid, tartaric acid, aspartic acid, oxalic acid, tatronic acid, oxaloacetic acid, isomalic acid, pyrocitric acid, glutaric acid, ketoglutaric acid, and mixtures thereof. The organic acids according to certain embodiments of the disclosure, may be added to the composition as the free-acid or as a salt. Suitable organic acid salts include, but are not limited to, sodium salts, potassium salts, magnesium salts, calcium salts, and ammonium salts. In one non-limiting embodiment of the disclosure, the organic acid or salt thereof, such as acetic acid, ascorbic acid, citric acid, aconitic acid, malic acid, fumaric acid, succinic acid, lactic acid, malonic acid, maleic acid, tartaric acid, aspartic acid, pyrocitric acid, or mixtures and salts thereof. Inorganic acids suitable for use within specific embodiments of the present disclosure include, but are not limited to, hydrochloric acid, phosphoric acid, sulfuric acid, nitric acid, oxoacids, or mixtures and salts thereof.

As used herein, the term "fermentation biomass" includes by-products left over from an aqueous fermentation process, such as an ethanol, lactate, lysine, fungal, or bacterial fermentation. The biomass may comprise the mycelium of a yeast or fungal fermentation and the media on which it was grown and may comprise the enzyme system of the viable organism and its concomitant metabolites produced during the fermentation process and not removed during the separation process. The biomass may further or alternatively comprise a bacterial fermentation mass and the media on which it was grown and may comprise the enzyme system of the viable organism and its concomitant metabolites produced during the fermentation process and not removed during the separation process.

Suitable fermentation biomass sources for use in the present disclosure include, but are not limited to, ethanol presscakes, such as presscakes of brewer's yeast (*Saccharomyces cerevisiae*), propagated yeast biomass, citric acid presscakes, biomasses from lactic acid fermentations, biomasses from bacterial fermentations, and biomasses from lysine fermentations and mixtures thereof. Yeast organisms suitable for use in the various non-limiting embodiments of the compositions disclosed herein may be any of a number of yeast including, but not limited to, the *Saccharomyces*, *Candida*, *Pichia*,
*Yarrowia, Kluyveromyces,* or *Torulaspora* species. In certain non-limiting embodiments of the disclosure, the yeast used may be *Pichia guilliermondii* or *Yarrowia Lipolytica.*

As used herein, the term "yeast culture" includes the product comprising mycelium of yeast fermentation and the media on which it was grown, such as, for example, a presscake. The yeast culture comprises the enzyme system of the viable organism and its concomitant metabolites produced during the fermentation process and not removed during the separation process. The process of separation includes, but is not limited to, filtration and pressing, and centrifugation. The fermentation process can be, but is not limited to, a penicillium fermentation, a *Streptomyces* fermentation, an ethanol fermentation, or a citric acid fermentation.

As used herein, the term "presscake" includes the filtered or centrifuged; and dried mycelium obtained from separation of the fermentation. The term "citric acid presscake", as used herein, includes the filtered or centrifuged; and dried mycelium obtained from a citric acid fermentation using an acceptable aqueous carbohydrate substrate. The term "ethanol presscake" includes the filtered or centrifuged mycelium obtained from an ethanol fermentation using an acceptable aqueous carbohydrate substrate. The yeast organism may be made nonviable and may be completely removed from the citric acid or ethanol during the separation and purification process. Citric acid presscakes can be a product resulting from *Pichia* or *Yarrowia* yeast fermentation to produce citric acid, in which case it contains cell walls and cell wall contents with high concentrations of mannanoligosaccharides, fructooligosaccharides, and/or beta-glucans. The oligosaccharides and yeast cultures that may be used in the compositions of the present disclosure may be obtained, for example, from a variety of commercial sources.

The various embodiments of the present disclosure may be better understood when read in conjunction with the following Examples.

### EXAMPLES

The following examples illustrate various non-limiting embodiments of the compositions and methods of the present disclosure and are not restrictive of the invention as otherwise described herein. Unless indicated others, all percentages are by weight.

### Example 1

In this Example, the impact of dietary capsicum addition on milk production arid lactation performance of lactating sows is described.

A total of 84 sows (Monsanto Choice Genetics, 54 parity-1 and 30 parity-2 sows) were used to evaluate the effects of adding a capsaicin product (i.e., an encapsulated capsicum) into lactation diets on lactation performance and subsequent reproduction. Based on body weight and parity, gestation sows were allocated to one of the two dietary treatments when they were moved into the farrowing crates. The movement occurred approximately 3 to 7 days before farrowing and gestation sows were fed with the lactation diets as soon as they were moved into the farrowing room. The compositions of the gestation dietary treatment and the two lactation dietary treatments are presented in Table 1. Lactation treatment 2 included 20 ppm of the capsaicin product. Diets were offered in pellet form. Sow and litter performance data were recorded at the start and end of lactation. Sows were allowed *ad libitum* access to feed and water throughout the lactation. Lactation length was approximately 16 days, determined by farrowing barn flow schedule, and was not an objective response variable in this study.

The effects of the diets on sow performance are presented in Table 2. Adding the capsaicin product to the diet tended to increase feed intake for parity-1 sows, which should provide more nutrients to nursing pigs through greater milk production. Taken together, a heavier weaning weight associated with capsaicin product-fed sows' litters may have resulted from an increased feed intake for parity-1 sows and or an improved blood flow to the mammary gland.

The effects of the diets on litter performance are presented in Table 3. Total born and born alive piglets were larger (more than one pig) for parity-1 sows fed capsicum diet than for those fed the diet without the capsaicin product. Born alive was statistically significant (P < 0.05; Table 3) between the two treatments. This litter size difference occurred in parity-1 sows and may be a randomization error since the gestation sows had received the experimental diets for only a few days and it was unlikely to be due to the treatment effect. Because of the litter size difference and the observation that sows with larger litters had less nutrient supply to support individual pig growth than sows with smaller litters, litter live birth weight was used as a covariate for those response variables that may be directly affected by litter size or litter birth weight.

**Table 1. Composition of Diets**

| **Stage** | **Gestation** | **Lactation** | | **Lactation** | |
|---|---|---|---|---|---|
| **Treatment No.** | **1** | **1** | | **2** | |
| **Diet** | **Control** | **Control** | | **Capsicum** | |
| **Ingredients, weight %** | | | | | |
| Alliance Laxeze Psy Pak | ----- | 0.50 | | 0.50 | |
| Corn, Ground | 58.04 | 52.14 | | 52.14 | |
| Wheat Middlings | 15.00 | 12.00 | | 12.00 | |
| 47.5% Soybean Meal | 12.76 | 24.22 | | 24.22 | |
| Arsoy-ADM | ----- | 1.72 | | 1.72 | |
| Lysine-HCl, 98% | 0.01 | 0.02 | | 0.02 | |
| Methionine, DL-99.5% | 0.01 | 0.03 | | 0.03 | |
| Yucca Nat. 30 IRRAD | 0.02 | 0.02 | | 0.02 | |
| Calcium Carbonate 38 | 1.24 | 1.08 | | 1.08 | |
| Phos Monocal 21 | 1.87 | 1.76 | | 1.76 | |
| Salt | 0.51 | 0.51 | | 0.51 | |
| Grease Mx Choice White | ----- | 4.19 | | 4.19 | |
| Ca Lignone Sulf | 1.50 | 1.50 | | 1.50 | |
| Soy Hulls | 8.70 | ----- | | ----- | |
| Capsicum | ----- | ----- | | 0.002 | |
| Microingredients¹ | 0.34 | 0.31 | | 0.31 | |
| Total | 100.00 | 100.00 | | 100.00 | |
| | | | | | |

| **Nutrients** | | | | | |
|---|---|---|---|---|---|
| Protein, % | 13.17 | 17.36 | (18.7)² | 17.36 | (18.2) |
| Fat; Crude, % | 2.50 | 6.50 | (6.6) | 6.50 | (7.0) |
| Crude Fiber, % | 6.08 | 3.18 | | 3.18 | |
| Dry Matter, % | 88.15 | 88.49 | | 88.49 | |
| Moisture, % | 11.85 | 11.51 | (11.9) | 11.51 | (11.9) |
| TME Swine, Kcal/lb | 1291.75 | 1442.18 | | 1442.18 | |
| Calcium, % | 1.00 | 0.90 | (0.91) | 0.90 | (0.90) |
| Phosphorus, % | 0.79 | 0.80 | (0.88) | 0.80 | (0.88) |
| Lysine, % | 0.69 | 1.00 | | 1.00 | |

| | | | | | |
|---|---|---|---|---|---|
| ¹Microingredients include swine vitamin and trace mineral premix, selenium, choline, chloride, and Endox. ²Analyzed values in parentheses. | | | | | |

The number of pigs weaned was larger (P < 0.05) for parity-1 sows fed the capsaicin product than for those fed no capsaicin product. This was due to live born difference (1.74 pigs) at birth between the two treatments. However, larger litter size at birth did not result in a significantly higher pre-weaning mortality, which may indicate that the capsaicin product might have a positive impact on increasing piglet survival rate during lactation. As a result of larger live born piglets (as measured at birth), litter gain over the entire lactation and litter daily gain were greater for sows fed the capsaicin product. The difference of litter daily gain tended to be significant (P < 0.10). Accordingly, litter weaning weight was heavier (2.84 kg) for sows fed the capsaicin product than sows fed no capsaicin product. This is consistent with the finding that individual pig weight was similar between the two treatments (P > 0.10). These results suggested that the heavier weaning weight resulted from larger litter size at weaning rather than heavier individual pigs.

In normal production situations, a larger litter size at birth may be associated with a lighter individual pig weight at weaning and, thus, may not result in a heavier litter weaning weight because of limited nutrient supply from the lactating sows. Nursing pigs received their nutrients solely from sow's milk, since no creep feeding was offered. A heavier weaning litter associated with feeding the capsaicin product to sows may suggest that the capsaicin product may have improved sow milk production in this experiment.

Data from this Example indicates that: feeding the capsaicin product increased feed intake of first-parity sows; the capsaicin product did not affect sow weight loss, backfat loss, or percentage of sows returning to estrus after weaning; and sows fed the capsaicin product appeared to have the capability to overcome the inadequate pig growth typically associated with larger litters.

**Table 2. Impact of Dietary Capsicum Addition on Lactation Performance and Subsequent Reproduction of Lactating Sows: Sow Performance**

| **Treatment #** | **1** | **2** | **1** | **2** | **Parity** | | **Treatment** | | ***P* Values** | | | | |
|---|---|---|---|---|---|---|---|---|---|---|---|---|---|
| **Parity** | **1** | **1** | **2** | **2** | | | | | **Live Birth** | | | **Trt x** | **Pairwise** |
| **Treatment** | **Capsicum** | **Control** | **Capsicum** | **Control** | **1** | **2** | **Capsicum** | **Control** | **Weight** | **Treatment** | **Parity** | **Parity** | **Comparison²** |
| No. of Sows | 26 | 28 | 15 | 15 | 54 | 30 | 41 | 43 | | | | | |
| | | | | | | | | | | | | | |
| Sow Weight, kg | | | | | | | | | | | | | |
| Initial | 199.65 | 199.14 | 215.93 | 218.52 | 199.40 | 217.23 | 207.79 | 208.83 | | 0.809 | 0.007 | 0.767 | bCDE |
| Farrowing | 187.97 | 187.81 | 199.12 | 205.90 | 187.89 | 202.51 | 193.55 | 196.85 | | 0.433 | 0.022 | 0.496 | CE |
| Weaning | 176.21 | 175.28 | 194.58 | 198.10 | 175.75 | 196.34 | 185.40 | 186.69 | 0.054 | 0.740 | 0.001 | 0.642 | BCDE |
| Weight loss¹ | -11.97 | -11.94 | -5.56 | -9.13 | -11.95 | -7.34 | -8.76 | -10.53 | 0.009 | 0.336 | 0.112 | 0.423 | bd |
| | | | | | | | | | | | | | |
| Lactation Length, d | 15.60 | 15.94 | 17.91 | 14.85 | 15.77 | 16.38 | 16.75 | 15.39 | | 0.220 | 0.710 | 0.206 | |
| | | | | | | | | | | | | | |
| Lactation Intake, kg/d¹ | 4.40 | 4.01 | 4.48 | 4.97 | 4.21 | 4.72 | 4.44 | 4.49 | 0.039 | 0.784 | 0.058 | 0.041 | acE |
| | | | | | | | | | | | | | |
| Backfat, mm | | | | | | | | | | | | | |
| Farrowing | 18.02 | 19.45 | 19.48 | 19.45 | 18.74 | 19.46 | 18.75 | 19.45 | | 0.267 | 0.438 | 0.340 | a |
| Weaning | 16.31 | 18.07 | 19.60 | 18.98 | 17.19 | 19.29 | 17.96 | 18.53 | 0.045 | 0.352 | 0.030 | 0.114 | ABC |
| Backfat change¹ | -1.71 | -1.38 | 0.12 | -0.48 | -1.54 | -0.18 | -0.80 | -0.93 | 0.001 | 0.712 | 0.016 | 0.287 | BCD |
| | | | | | | | | | | | | | |
| % Sows returned to estrus day 8 postweaning | 57.69 | 67.86 | 80.00 | 66.67 | 63.00 | 73.30 | 65.90 | 67.40 | | 0.860 | 0.340 | 0.260 | |

| | | | | | | | | | | | | | |
|---|---|---|---|---|---|---|---|---|---|---|---|---|---|
| ¹The data were analyzed using "live birth weight" as a covariate. ²A lower case letter refers to .05 < P < .10 and an upper case letter refers to P < .05. A or a=Trt 1 vs. Trt 2 B or b=Trt 1 vs. Trt 3 C or c=Trt 1 vs. Trt 4 D or d=Trt 2 vs. Trt 3 E or e=Trt 2 vs. Trt 4 F or f=Trt 3 vs. Trt 4 | | | | | | | | | | | | | |

| **Table 3. Impact of Dietary Capsicum Addition on Lactation Performance and Subsequent Reproduction of Lactating Sows: Litter Performance** | | | | | | | | | | | | | |
|---|---|---|---|---|---|---|---|---|---|---|---|---|---|
| | | | | | | | | | | | | | |
| **Treatment #** | **1** | **2** | **1** | **2** | **Parity** | | **Treatment** | | ***P Values*** | | | | |
| **Parity** | **1** | **1** | **2** | **2** | | | | | **Live Birth Weight** | | | **Trt x Parity** | **Pairwise Comparison²** |
| **Treatment** | **Capsicum** | **Control** | **Capsicum** | **Control** | **1** | **2** | **Capsicum** | **Control** | | **Treatment** | **Parity** | | |
| **Litter Characteristics** | | | | | | | | | | | | | |
| Total fully-formed pigs | 13.38 | 12.19 | 15.06 | 14.47 | 12.79 | 14.77 | 14.22 | 13.33 | | 0.248 | 0.083 | 0.746 | de |
| Live born | 12.65 | 10.91 | 13.86 | 13.45 | 11.78 | 13.65 | 13.26 | 12.18 | | 0.114 | 0.065 | 0.413 | ADE |
| Stillborn | 0.59 | 0.95 | 1.00 | 0.95 | 0.77 | 0.97 | 0.79 | 0.95 | | 0.522 | 0.573 | 0.494 | |
| Mummies | 0.14 | 0.34 | 0.21 | 0.08 | 0.24 | 0.14 | 0.17 | 0.21 | | 0.796 | 0.643 | 0.320 | |
| Number weaned¹ | 10.28 | 9.41 | 9.93 | 9.23 | 9.85 | 9.58 | 10.10 | 9.32 | <0.0001 | 0.011 | 0.569 | 0.824 | AC |
| Survival, %¹ | 82.08 | 84.80 | 79.26 | 81.37 | 83.44 | 80.31 | 80.67 | 83.08 | 0.526 | 0.340 | 0.428 | 0.921 | |
| | | | | | | | | | | | | | |
| **Litter Weights, kg** | | | | | | | | | | | | | |
| Birth weight | 16.13 | 14.56 | 18.42 | 19.17 | 15.35 | 18.80 | 17.28 | 16.87 | | 0.612 | 0.005 | 0.235 | CDE |
| Live birth weight | 15.57 | 13.65 | 17.56 | 18.34 | 14.61 | 17.95 | 16.57 | 16.00 | | 0.461 | 0.005 | 0.153 | ACDE |
| Wean weight | 53.34 | 50.50 | 48.65 | 47.26 | 51.92 | 47.96 | 50.99 | 48.88 | <0.0001 | 0.358 | 0.271 | 0.797 | |
| Litter gain, kg¹ | 38.25 | 35.42 | 33.56 | 32.17 | 36.83 | 32.87 | 35.91 | 33.79 | 0.049 | 0.358 | 0.271 | 0.797 | |
| Litter daily gain, kg¹ | 2.44 | 2.19 | 2.14 | 2.26 | 2.32 | 2.20 | 2.29 | 2.23 | 0.085 | 0.589 | 0.506 | 0.174 | a |
| | | | | | | | | | | | | | |
| **Piglet Weights, kg/hd** | | | | | | | | | | | | | |
| Live birth weight | 1.25 | 1.29 | 1.27 | 1.37 | 1.27 | 1.32 | 1.26 | 1.33 | | 0.239 | 0.547 | 0.688 | |
| Wean weight¹ | 5.24 | 5.37 | 5.02 | 5.21 | 5.30 | 5.11 | 5.13 | 5.29 | 0.509 | 0.498 | 0.598 | 0.907 | |

| | | | | | | | | | | | | | |
|---|---|---|---|---|---|---|---|---|---|---|---|---|---|
| ¹The data were analyzed using "live birth weight" as a covariate. ²A lower case letter refers to .05 < P < .10 and an upper case letter refers to P < .05. A or a=Trt 1 vs. Trt 2 B or b=Trt 1 vs. Trt 3 C or c=Trt 1 vs. Trt 4 D or d=Trt 2 vs. Trt 3 E or e=Trt 2 vs. Trt 4 F or f=Trt 3 vs. Trt 4 | | | | | | | | | | | | | |

### Example 2

In this Example, sows were fed a diet containing a capsaicin product during the latter stages of gestation. The addition of the capsaicin product was evaluated as a dietary tool to support the production of a more robust weaned piglet. This study evaluated the effect of feeding capsicum to sows during the final two weeks of gestation on sow and piglet performance. In addition, a lipopolysaccharide ("LPS") challenge was conducted to determine effects on immune function.

Sows were fed a common diet through early and mid-gestation. Two weeks prior to the first projected sow farrowing date, treatment diets were initiated. Treatment included a standard control diet or the control diet with 25 ppm added capsaicin product (Table 4). All sows remained on treatment (n=31) or control (n=33) diet until the day of farrowing. At farrowing, sows were provided with a common lactation diet. Sow performance data is presented in Tables 5. Sow initial weight was significantly different between control and treatment sows (224 kg vs. 209 kg, respectively). Because sows had not been offered the diets including the capsaicin product prior to this time, this initial weight difference is a random effect. The weight difference carried through to farrowing and weaning weights. During lactation, sows fed the capsaicin product diet tended to lose less weight between farrowing and waning, but had a lower body condition score at weaning. Body condition score included a visual assessment of fat depositions.

**Table 4. Composition of Diets**

| **Treatment** | **Control** | **Capsaicin Enhanced** |
|---|---|---|
| **Ingredients, weight %** | | |
| Corn Ground | 56.61 | 56.61 |
| Wheat Middlings | 15.00 | 15.00 |
| 47.5% Soybean Meal | 13.06 | 13.06 |
| Soy Hulls | 10.09 | 10.08 |
| Phos Monocal 21 | 1.82 | 1.82 |
| Ca Lignone Sulf | 1.50 | 1.50 |
| Calcium Carbonate 38 | 0.99 | 0.99 |
| Salt | 0.51 | 0.51 |
| Choline 75 | 0.10 | 0.10 |
| Yucca Nat. 30 IRRAD | 0.02 | 0.02 |
| Lysine-HCl, 98% | 0.01 | 0.01 |
| Methionine, DL-99.5% | 0.00 | 0.00 |
| Xtract 6933 (Capsicum) | ----- | 0.0025 |
| Microingredients¹ | 0.29 | 0.29 |
| **Total** | 100.00 | 100.00 |
| | | |
| | Calculated Nutrient Analysis | |
| Protein, % | 13.50 | 13.50 |
| Fat; Crude, % | 2.84 | 2.84 |
| Crude Fiber, % | 6.40 | 6.40 |
| Dry Matter, % | 89.04 | 89.04 |
| Moisture, % | 10.96 | 10.96 |
| ME Swine, kc/kg | 3014.24 | 3014.24 |
| TME Swine, kc/kg | 2845.84 | 2845.84 |
| Calcium, % | 0.90 | 0.90 |
| Phosphorus, % | 0.80 | 0.80 |
| Lysine, % | 0.72 | 0.72 |

| | | |
|---|---|---|
| ¹ Microingredients include swine vitamin and trace mineral premix, selenium, and Endox. | | |

Piglet performance is presented in Table 6. The number of fully formed piglets was lower in pigs fed the capsaicin product diet (14.7 vs. 12.5). The may be a random effect as the number of piglets would be determined early in gestation. The number of stillborn and mummies was lower in pigs fed the capsaicin product diet and survival % was increased. Litter birth weights were similar for treatment and control sows. Litter weaning weights, litter gain, litter daily gain, piglet birth weight and piglet weaning weight were numerically increased in litters reared by sows that had been fed the capsaicin product.

Piglet response to the LPS challenge was evaluated on a subset of litters. Piglets were collected at birth, dried, weighed, and rectal temperature collected. Four pigs in each litter were randomly selected for the LPS challenge at 15 hours of life and four different pigs at 63 hours. One hour prior to LPS measurement, piglets were removed from the sow and moved into a room separate from the farrowing room. Piglets were housed in bedded containers in pairs. Baseline blood temperatures were collected and an LPS or saline injection was administered based upon body weight ("BW"). Both rectal and tympanic temperatures were monitored. After the piglets were examined, they were returned to the sow.

The LPS challenge uses the exterior cell wall of bacteria to illicit an immune response. The exterior cell walls of bacteria contain identifying compounds known as lipopolysaccharides (LPS). When the LPS is extracted from bacteria the bacteria are no longer pathogenic, however they do trigger an immune response. A measured dose of LPS was injected into the peritoneum of a newborn piglet. Changes in body temperature and blood metabolites (cortisol) were measured to assess responsiveness of the immune system. As shown in Table 7, the diet fed (capsaicin product or control) had a significant effect (P<0.032) on rectal temperature of the piglets. Also that the diet fed (capsaicin or control) had a significant effect on whether piglets demonstrated a rectal temperature response to LPS or not (diet x Trt = 0.011). Table 8 illustrates that the cortisol response to the lipopolysaccharide test. Mature piglets from sows fed capsaicin had a numerically reduced level of cortisol following immune system activation (LPS) as compared to the piglets of sows fed the control diet.

**Table 5. Impact of Capsicum Addition to Gestating Sow Diets on Birth Weight and Thermogenic Capacity of Piglets: Sow Performance**

| | **Treatment** | | **Parity** | | | **Group** | | | **P Values** | | | | | | |
|---|---|---|---|---|---|---|---|---|---|---|---|---|---|---|---|
| | **Control** | **Capsicum** | **1** | **2** | **3+** | **1** | **2** | **3** | **Days on Test Diet** | **Group** | **Parity** | **Group x Parity** | **Diet** | **Group x Diet** | **Parity x Diet** |
| **No. of Sows Sow Weight, kg** | 33 | 31 | 13 | 18 | 33 | 25 | 23 | 16 | | | | | | | |
| Initial | 224.11 | 209.47 | 198.50 | 224.46 | 227.42 | 218.16 | 229.29 | 202.93 | 0.266 | 0.022 | 0.004 | 0.705 | 0.012 | 0.585 | 0.360 |
| Farrowing | 216.61 | 201.25 | 187.08 | 222.63 | 217.08 | 205.09 | 212.14 | 209.56 | 0.782 | 0.594 | 0.006 | 0.944 | 0.018 | 0.421 | 0.766 |
| Weaning | 207.54 | 194.44 | 182.84 | 208.13 | 212.01 | 195.09 | 198.89 | 209.00 | 0.871 | 0.433 | 0.007 | 0.810 | 0.034 | 0.580 | 0.598 |
| Weight loss | -9.07 | -6.81 | -4.24 | -14.50 | -5.07 | -10.00 | -13.25 | -0.56 | 0.813 | 0.091 | 0.124 | 0.589 | 0.488 | 0.701 | 0.895 |
| | | | | | | | | | | | | | | | |
| **Body Condition Score** | | | | | | | | | | | | | | | |
| Farrowing | 3.14 | 3.09 | 3.22 | 3.05 | 3.07 | 3.03 | 3.16 | 3.15 | 0.714 | 0.368 | 0.543 | 0.757 | 0.640 | 0.980 | 0.937 |
| Weaning | 3.04 | 2.91 | 3.11 | 2.82 | 3.00 | 2.90 | 2.97 | 3.05 | 0.557 | 0.542 | 0.155 | 0.478 | 0.090 | 0.907 | 0.575 |
| Change | -0.09 | -0.19 | -0.11 | -0.24 | -0.08 | -0.12 | -0.20 | -0.10 | 0.874 | 0.632 | 0.349 | 0.267 | 0.253 | 0.980 | 0.515 |
| | | | | | | | | | | | | | | | |
| **Sow Structure Score** | 3.55 | 3.57 | 3.50 | 3.67 | 3.51 | 3.60 | 3.61 | 3.47 | 0.319 | 0.654 | 0.417 | 0.165 | 0.803 | 0.066 | 0.455 |
| | | | | | | | | | | | | | | | |
| **Lactation Length, d** | 15.07 | 15.30 | 16.33 | 14.34 | 14.89 | 12.65 | 15.06 | 17.85 | <0.0001 | <0.0001 | 0.250 | 0.087 | 0.731 | 0.252 | 0.209 |
| | | | | | | | | | | | | | | | |
| **Lactation Feed Intake**, **kg/d** | 4.48 | 4.34 | 4.14 | 4.48 | 4.60 | 4.90 | 4.77 | 3.55 | 0.013 | 0.001 | 0.228 | 0.188 | 0.439 | 0.577 | 0.015 |
| | | | | | | | | | | | | | | | |
| **Backfat, mm** | | | | | | | | | | | | | | | |
| Farrowing | 17.69 | 17.70 | 17.64 | 17.03 | 18.42 | 17.79 | 17.86 | 17.44 | 0.384 | 0.960 | 0.428 | 0.671 | 0.993 | 0.822 | 0.746 |
| Weaning | 16.95 | 17.14 | 17.04 | 16.22 | 17.87 | 16.69 | 17.68 | 16.76 | 0.121 | 0.557 | 0.356 | 0.375 | 0.824 | 0.784 | 0.318 |
| Backfat loss | -0.74 | -0.56 | -0.59 | -0.80 | -0.55 | -1.10 | -0.18 | -0.67 | 0.362 | 0.484 | 0.968 | 0.632 | 0.789 | 0.991 | 0.361 |
| | | | | | | | | | | | | | | | |
| **Return to Estrus, days** | 4.99 | 4.93 | 3.33 | 5.96 | 5.60 | 5.75 | 4.10 | 5.03 | 0.086 | 0.610 | 0.539 | 0.784 | 0.969 | 0.621 | 0.692 |

**Table 6. Impact of Capsicum Addition to Gestating Sow Diets on Birth Weight and Thermogenic Capacity of Piglets: Litter Performance**

| | **Treatment** | | **Parity** | | | **Group** | | | **P Values** | | | | | | |
|---|---|---|---|---|---|---|---|---|---|---|---|---|---|---|---|
| | **Control** | **Capsicum** | **1** | **2** | **3+** | **1** | **2** | **3** | **Days on Test Diet** | **Group** | **Parity** | **Group x Parity** | **Diet** | **Group x Diet** | **Parity x Diet** |
| **Litter Characteristics** | | | | | | | | | | | | | | | |
| Fully-formed pigs | 14.71 | 12.49 | 15.57 | 13.33 | 11.90 | 13.58 | 14.87 1 | 12.34 | 0.498 | 0.375 | 0.086 | 0.706 | 0.062 | 0.385 | 0.976 |
| Live born | 12.70 | 11.11 | 14.01 | 11.12 | 1Q.59 | 12.45 | 13.25 1 | 10.02 | 0.461 | 0.167 | 0.057 | 0.115 | 0.103 | 0.420 | 0.817 |
| Stillborn | 1.72 | 1.34 | 1.44 | 2.12 | 1.04 | 1.04 | 1.40 | 2.17 | 0.973 | 0.419 | 0.269 | 0.281 | 0.439 | 0.252 | 0.830 |
| Mummies | 0.29 | 0.03 | 0.12 | 0.09 | 0.27 | 0.10 | 0.23 | 0.15 | 0.454 | 0.703 | 0.486 | 0.899 | 0.061 | 0.483 | 0.449 |
| Total after fostering | 12.46 | 11.35 | 13:73 | 11.40 | 10.57 | 12.40 | 13.28 1 | 10.03 | 0.485 | 0.105 | 0.045 | 0.088 | 0.203 | 0.785 | 0.803 |
| Number weaned | 10.12 | 10.08 | 10.85 | 10.32 | 9.13 | 10.45 | 10.49 | 9.36 | 0.874 | 0.673 | 0.177 | 0.579 | 0.960 | 0.975 | 0.474 |
| Survival, % | 83.66 | 89.82 | 79.34 | 93.38 | 87.51 | 86.01 | 80.98 | 93.24 | 0.460 | 0.225 | 0.247 | 0.142 | 0.154 | 0.544 | 0.228 |
| | | | | | | | | | | | | | | | |
| **Litter Weights, kg** | | | | | | | | | | | | | | | |
| Birth weight | 20.56 | 19.22 | 21.80 | 19.98 | 17.88 | 19.02 | 21.60 1 | 19.04 | 0.191 | 0.294 | 0.178 | 0.754 | 0.399 | 0.789 | *0.794* |
| Live birth weight | 18.59 | 17.77 | 20.21 | 17.50 | 16.83 | 17.89 | 20.24 1 | 16.41 | 0.168 | 0.234 | 0.332 | 0.429 | 0.597 | 0.592 | 0.883 |
| Wean weight | 48.56 | 49.57 | 50.23 | 51.12 | 45.84 | 52.90 | 48.82 4 | 45.48 | 0.002 | 0.345 | 0.375 | 0.388 | 0.759 | 0.965 | 0.846 |
| Litter gain, kg | 29.96 | 31.81 | 30.01 | 33.63 | 29.01 | 35.00 | 28.58 2 | 29.07 | <0.0001 | 0.050 | 0.395 | 0.316 | 0.447 | 0.776 | 0.579 |
| Litter daily gain, kg | 2.02 | 2.19 | 2.02 | 2.32 | 1.97 | 2.50 | 2.06 | 1.76 | 0.611 | 0.013 | 0.327 | 0.335 | 0.297 | 0.670 | 0.306 |
| | | | | | | | | | | | | | | | |
| **Piglet Weights, kg/hd** | | | | | | | | | | | | | | | |
| Live birth weight | 1.51 | 1.61 | 1.49 | 1.56 | 1.64 | 1.47 | 1.58 | 1.64 | 0.002 | 0.397 | 0.423 | 0.753 | 0.270 | 0.122 | 0.601 |
| Wean weight | 4.88 | 4.95 | 4.71 | 4.97 | 5.08 | 5.10 | 4.71 | 4.93 | <0.0001 | 0.213 | 0.432 | 0.577 | 0.708 | 0.599 | 0.372 |

**Table 7. Impact of Capsicum Addition to Gestating Sow Diets on Birth Weight and Thermogenic Capacity of Piglets: Temperatures**

| **At Birth** | | | | | | | | | | | | |
|---|---|---|---|---|---|---|---|---|---|---|---|---|
| **Diet No.** | **1** | **2** | **SE** | **P Values** | | | | | | | | |
| **Diet Description** | **Control** | **Capsicum** | | **Days on Test Diet** | **Group** | **Diet** | | | | | | |
| Birth Weight, kg | 1.14 | 1.30 | 0.10 | 0.091 | 0.142 | 0.173 | | | | | | |
| Birth Rectal Temp, °C (°F) | 35.87(96.56) | 36.21(97.17) | 0.90 | 0.219 | 0.332 | 0.558 | | | | | | |

| **After Injection** | | | | | | | | | | | | |
|---|---|---|---|---|---|---|---|---|---|---|---|---|
| **Number** | **Diet 1** | **Diet 2** | **SE** | **Trt 1** | **Tart 2** | **SE** | **Time 1** | **Time 2** | **SE** | | | |
| **Description** | **Control** | **Capsicum** | | **LPS** | **Saline** | | **24 Hrs** | **72 Hrs** | | | | |
| Ear Temperature, °C | 38.75 | 38.73 | 0.06 | 38.81 | 38.68 | 0.05 | 38.32 | 39.17 | 0.06 | | | |
| Rectal Temperature, °C | 38.80 | 38.86 | 0.05 | 38.89 | 38.77 | 0.04 | 38.43 | 39.23 | 0.06 | | | |

| **P Values After Injection** | | | | | | | | | | | | |
|---|---|---|---|---|---|---|---|---|---|---|---|---|
| | **Days on Test Diet** | **Barrel Temp.** | **Room Temp.** | **Temp.** | **Group** | **Diet** | **Trt** | **Diet x Trt** | **Trt Time** | **Diet x Trt Time** | **Trt x Trt Time** | **Diet x Trt x Trt Time** |
| Ear Temperature | 0.001 | 0.088 | 0.053 | <0.0001 | 0.007 | 0.568 | <0.0001 | 0.276 | <0.0001 | 0.559 | 0.001 | 0.564 |
| Rectal Temperature | 0.017 | 0.003 | 0.413 | <0.0001 | 0.042 | 0.032 | <0.0001 | 0.011 | <0.0001 | 0.661 | <0.0001 | 0.0004 |

**Table 8. Impact of Capsicum Addition to Gestating Sow Diets on Birth Weight and Thermogenic Capacity of Piglets: LPS Cortisol Data**

| | | | **Age (hrs)** | | **SE** | **Trt** | | **SE** | **LPS** | **LPS** | **Saline** | **Saline** | **SE** |
|---|---|---|---|---|---|---|---|---|---|---|---|---|---|
| | | | **24** | **72** | | **LPS** | **Saline** | | **24** | **72** | **24** | **72** | |
| LPS Cortisol | | | 95.19 | 90.41 | 7.13 | 134.13 | 51.47 | 6.89 | 145.04 | 123.22 | 45.35 | 57.59 | 10.29 |

| | **Diet** | | **SE** | **Control** | **Control** | **Capsicum** | **Capsicum** | **SE** | **Control** | **Control** | **Capsicum** | **Capsicum** | **SE** |
|---|---|---|---|---|---|---|---|---|---|---|---|---|---|
| | **Control** | **Capsicum** | | **24** | **72** | **24** | **72** | | **LPS** | **Saline** | **LPS** | **Saline** | |
| LPS Cortisol | 96.16 | 89.44 | 7.80 | 95.26 | 97.06 | 95.12 | 83.76 | 11.22 | 143.22 | 49.11 | 125.04 | 53.83 | 10.85 |

| | | | | | **Control** | **Control** | **Control** | **Control** | **Capsicum** | **Capsicum** | **Capsicum** | **Capsicum** | **SE** |
|---|---|---|---|---|---|---|---|---|---|---|---|---|---|
| | | | | | **LPS** | **LPS** | **Saline** | **Saline** | **LPS** | **LPS** | **Saline** | **Saline** | |
| | | | | | **24** | **72** | **24** | **72** | **24** | **72** | **24** | **72** | |
| LPS Cortisol | | | | | 144.67 | 141.77 | 45.86 | 52.35 | 145.40 | 104.68 | 44.83 | 62.84 | 15.92 |

| ***P Values*** | | | | | | | | | | | | | |
|---|---|---|---|---|---|---|---|---|---|---|---|---|---|
| | | | | | **Days on Test Diet** | **Group** | **Age** | **Trt** | **Trt x Age** | **Diet** | **Diet x Age** | **Diet x Trt** | **Diet x Trt x Age** |
| LPS Cortisol | | | | | 0.822 | 0.684 | 0.605 | <0.0001 | 0.068 | 0.471 | 0.477 | 0.219 | 0.184 |

### Example 3

In this Example, the effects of a diet containing the feed supplement comprising a capsaicin product on the performance of dairy cattle subject to heat stress in a commercial dairy operation was examined and disclosed.

Four groups of dairy cattle of 70, 74, 112, and 119 cows having an average body weight of 568 kg, 591 kg, 602 kg, and 614 kg, respectively, were subjected to the following conditions. The dairy cattle were fed a control ration for 1 month to establish a baseline data set. After the month, the cattle were fed the control ration mixed with a supplement containing the capsaicin product in 0.11% by weight for 30 days. The supplement was mixed with the control ration in an amount of 56.8 grams per head per day. The composition of the supplement is disclosed in Table 9.

**Table 9. Supplement Composition**

| **INGREDIENTS, percent by weight** | |
|---|---|
| FERMACTO-500 (Aspergillus meal prebiotic) | 49.50 |
| DIST DR GRN & SOL | 31.57 |
| CITRISTIM (Yeast Product) | 16.00 |
| SOY OIL | 2.64 |
| *Enterococcus Faecium* (Pioneer PDFM) | 0.18 |
| CAPSICUM | 0.11 |
| | |

| **NUTRIENTS (DM basis)** | |
|---|---|
| DRY MATTER (%) | 93.19 |
| PROTEIN (%) | 24.90 |
| FAT (%) | 9.93 |
| CRUDE FIBER (%) | 17.93 |
| RUM UNDEGR PROT (%) | 5.03 |
| RUM DEGR PROTEIN (%) | 19.87 |
| SOL INTAKE PROT (%) | 1.68 |
| ACID DET FIBER (%) | 25.35 |
| NEUT DET FIBER (%) | 42.44 |
| NON FIBER CHO (%) | 23.52 |
| NE:LACTATION (MC/LB) | 0.36 |
| CALCIUM (%) | 0.07 |
| PHOSPHORUS (%) | 0.29 |
| SODIUM (%) | 0.18 |
| CHLORIDE (%) | 0.05 |
| MAGNESIUM (%) | 0.05 |
| POTASSIUM (%) | 0.14 |
| SULFUR (%) | 0.10 |
| IRON (PPM) | 79.96 |
| ZINC (PPM) | 27.11 |

Somatic cell count, milk output, milk fat content in produced milk, daily mass intake ("DMI"), number of lame cattle, and number of cattle in estrus were measured. The results of the dairy cattle performance is presented in Table 10.

**Table 10. Effect of Capsicum Supplement on Dairy Cattle Performance**

| | **Pre-Test** | **After** | **Change** | **Change(%)** |
|---|---|---|---|---|
| Somatic Cell Count | 599,000 | 446,000 | (-) 153,000 | 26% decrease (improvement) |
| Milk (kg/d) | 29.4 | 31.1 | (+) 1.7 | 5.7% increase (improvement) |
| Milk Fat (%) | 3.50 | 3.51 | (+) 0.01 | 0.3% increase (improvement) |
| DMI (kg/hd/d) | 19.57 | 19.62 | (+) 0.05 | 0.3% increase (improvement) |
| Lame cattle | 15 | 3 | (-) 12 | 80% decrease (improvement) |
| Cattle in estrus | 27 | 64 | (+) 37 | 137% increase (improvement) |

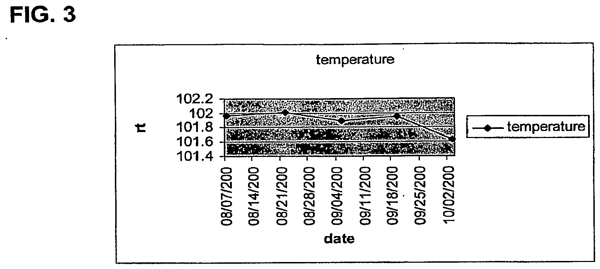

Cattle response to heat stress was also examined by measurement of rectal temperature. The rectal temperatures of a representative sample of test cows (10-11 cows) was measured approximately every 14 days and averaged. The average rectal temperatures for cattle while the cattle were fed the supplement containing the capsaicin product and air temperatures are presented in Table 11 and FIG. 3. As shown in FIG. 3, an overall decrease in rectal temperature was observed during the treatment period.

**Table 11. Temperature Response to Capsicum Diet**

| Day of Trial | 1 | 15 | 29 | 43 | 57 |
|---|---|---|---|---|---|
| Air Temperature (high) | 27.8°C (82°F) | 35.0°C (95°F) | 28.3°C (83°F) | 32.2°C (90°F) | |
| Rectal Temperature (ave) | 38.87°C (101.97°F) | 38.89°C (102.01°F) | 38.83°C (101.90°F) | 38.86°C (101.95°F) | 38.68°C (101.63°F) |

### Example 4

In this Example, the effect of feed supplements comprising a capsaicin product on the performance of beef cattle was examined. The cattle in the Example were stressed cattle that were newly weaned and transitioning to high-energy diets.

One hundred fifty-eight crossbred steer calves (16 pens; initial weight 251 kg) were utilized in a randomized, complete-block design to evaluate the effects of a dose titration (0, 200, 400, or 600 mg botanical extract/head/d) of a blended botanical on cattle performance and health parameters. The botanical blend included a capsaicin product, cinnamaldehyde, and eugenol. The extracts were delivered daily in a 56.8 g/head/d (2 oz./head/d) top-dress supplement over a common arrival and/or growing (corn silage based, 14.5 % CP, 47.8 Mcal/cwt NEg) diet (Grower diet formulation listed in Table 12). Formulated levels of eugenol + cinnamaldehyde and capsaicin product delivered in the blends were 60/13.4 mg/head/d, 120/26.6 mg/head/d, and 180/40 mg/head/d for treatments 2, 3, and 4, respectively. The composition of the capsaicin product supplement is presented in Table 13.

**Table 12. Grower Diet Composition and Nutrient Analysis**

| | **Grow Diet** |
|---|---|
| **Ingredients, weight % DM** | |
| Corn Silage 50% Gr | 37.55 |
| Distillers Grain + Solubles | 16.58 |
| 18% Hay Pellet | 14.88 |
| Supplement (see Table 13) | 9.17 |
| Soy Hulls | 8.32 |
| Corn Grain Cracked | 7.47 |
| Cottonseed Hulls | 6.03 |
| Total | 100.00 |

**Table 13. Supplement Composition and Nutrient Analysis**

| **Botanical Extract, mg/hd/d** | **200** | **400** | **600** |
|---|---|---|---|
| **Ingredients**, **% by weight as fed** | | | |
| Solulac | 97.64 | 97.28 | 96.94 |
| Soy Oil | 2.00 | 2.00 | 2.00 |
| Eugenol + cinnamaldehyde (encapsulated) | 0.26 | 0.53 | 0.79 |
| Capsicum (encapsulated) | 0.09 | 0.18 | 0.26 |
| Fenugreek flavoring agent (Covatec 571) | 0.01 | 0.01 | 0.01 |
| Total | 100.00 | 100.00 | 100.00 |

Initial weights were collected before cattle had access to feed and water. Cattle were allotted to four weight blocks so that pen means within blocks were similar. Cattle were weighed on days 7, 14, and 35. Periods were 1) days 1 to 7, 2) days 8 to 14, 3) days 15 to 35, and 4) cumulative (days 1 to 35). Health data were analyzed for differences in mortality and morbidity (% treated and retreated). Data is reported in Table 13.

By design, initial weight did not differ between treatments. Calves fed 400 mg of the capsaicin product containing blend tended to have greater weights at day 7 (P=0.19; vs. 600 mg) and day 14 (P=0.23; vs. control). Final weight was not different, but numerically favored animals fed the capsaicin product containing blend. Similarly, calves fed 400 mg of the capsaicin product containing blend tended (P=0.19) to have greater average daily gain ("ADG") in period 1 when compared to calves fed 600 mg of the capsaicin product containing blend. In period 2, ADG tended (linear; P=0.11) to increase with level of the capsaicin product containing blend (1.14, 1.55, 1.60, and 1.68 kg/d for 0, 200, 400, and 600 mg of extract/d, respectively). Cumulative ADG was not different, but numerically favored calves fed the capsaicin product containing blend.

In periods 1 and 2, daily mass intake ("DMI") was not different but tended (quadratic; P<0.22) to be lowest for cattle fed 600 mg of the capsaicin product containing blend per day. Cumulative DMI was not altered (P>0.43) by the capsaicin product containing blend. In period 1, feed efficiency was not different, however, in period 2 efficiency increased (linear; P<0.05) with the level of the capsaicin product containing blend. Cumulative feed efficiency was not different, but numerically favored calves fed the capsaicin product containing blend. Only calves fed 600 mg of the capsaicin product containing blend had a zero incidence of mortality. Control cattle had a greater incidence of morbidity. Cattle fed the capsaicin product containing blend were treated (P=0.16) and retreated (P<0.05) 50 to 84% less than controls.

**Table14. Performance Results in Beef Cattle**

| **Botanical Extract, mg/hd/d** | **0** | **200** | **400** | **600** | | **P Values** |
|---|---|---|---|---|---|---|
| | | | | | | **Treatment** |
| **Treatment #** | **1** | **2** | **3** | **4** | **SE** | |
| # of Pens | 4 | 4 | 4 | 4 | | |
| # of Cattle | 39 | 40 | 39 | 40 | | |
| | | | | | | |

| **Weight, kg** | | | | | | |
|---|---|---|---|---|---|---|
| Day 0 | 251.2 | 251.2 | 251.2 | 251.2 | | |
| Day 7 | 267.1 | 266.7 | 267.8 | 265.2 | 11.38 | 0.56 |
| Day 14 | 275.1 | 277.5 | 279.1 | 277.0 | 11.75 | 0.66 |
| Day 35 | 298.4 | 300.7 | 299.3 | 300.2 | 13.55 | 0.94 |
| | | | | | | |

| **Average Daily Gain, kg/hd/d** | | | | | | |
|---|---|---|---|---|---|---|
| Day 1-7 | 1.98 | 1.93 | 2.08 | 1.75 | 0.20 | 0.57 |
| Day 8-14 | 1.14 | 1.55 | 1.60 | 1.68 | 0.21 | 0.33 |
| Day 15-35 | 1.11 | 1.10 | 0.97 | 1.10 | 0.13 | 0.73 |
| Day 1-35 | 1.31 | 1.37 | 1.34 | 1.36 | 0.11 | 0.94 |
| | | | | | | |

| **Dry Matter Intake, kg/hd/d** | | | | | | |
|---|---|---|---|---|---|---|
| Day 1-7 | 3.67 | 3.71 | 3.75 | 3.57 | 0.13 | 0.49 |
| Day 8-14 | 5.89 | 6.19 | 5.82 | 5.60 | 0.33 | 0.29 |
| Day 15-35 | 7.08 | 7.37 | 7.05 | 7.33 | 0.44 | 0.81 |
| Day 1-35 | 6.09 | 6.32 | 6.06 | 6.16 | 0.34 | 0.84 |
| | | | | | | |

| **Gain/Feed, x 100** | | | | | | |
|---|---|---|---|---|---|---|
| Day 1-7 | 54.07 | 51.92 | 55.38 | 48.96 | 4.83 | 0.67 |
| Day 8-14 | 19.12 | 24.94 | 27.46 | 30.10 | 3.21 | 0.17 |
| Day 15-35 | 15.64 | 14.93 | 13.66 | 15.03 | 1.46 | 0.81 |
| Day 1-35 | 21.37 | 21.69 | 21.98 | 22.10 | 1.01 | 0.94 |
| | | | | | | |

| **Health Analysis** | | | | | | |
|---|---|---|---|---|---|---|
| Mortality, % | 2.56 | 2.50 | 2.56 | 0.00 | | 0.79 |
| Morbidity, % | | | | | | |
| Treated | 15.38 | 2.50 | 7:69 | 5.00 | | 0.16 |
| Retreated | 12.82 | 2.50 | 2.56 | 0.00 | | 0.03 |

These data indicate that the capsaicin product containing blends improved ADG, feed efficiency, and health status of growing cattle. While 200 mg of the capsaicin product containing blend per day may be more cost effective, 400 mg of the capsaicin product containing blend optimized performance in growing cattle. The capsaicin product containing blends improved metabolic efficiency of stressed cattle newly weaned or transitioning to high-energy diets.

### Example 5

In this Example, the effect of feed supplements comprising a capsaicin product on the performance of beef cattle was examined. The cattle in the Example were cattle in feedlot situations.

One hundred sixty crossbred steer calves (16 pens; initial weight 265 kg) were utilized in a 2 × 2 factorial design to validate growth and health response of arrival cattle fed a botanical extract containing a capsaicin product to evaluate the interaction of the botanical extracts and capsaicin with Rumensin (monensin sodium, available from Elanco Animal Health, Greenfield, Indiana) in growing beef diets. The capsaicin product containing blend (400 mg/head/d) was delivered daily in a 56.8 g/head/d (2 oz./head/d) top-dress supplement over a common arrival (proprietary arrival product and hay) and/or growing (corn silage based, 14.5 % CP, 46.8 Mcal/cwt NEg) diet with or without 200 mg/head/d Rumensin (see Table 15). The formulated levels of active eugenol/cinnamaldehyde/capsaicin delivered in the blend were 73, 48, and 26.6 mg/d, respectively. The composition of the capsaicin product containing blend is listed in Table 16.

Initial weights were collected before cattle had access to feed and water. Cattle were allotted to four weight blocks so that pen means within blocks were similar. Cattle were weighed on days 6, 13, and 34; and over periods of: (1) days 1 to 6, (2) days 7 to 13, (3) days 14 to 34, and (4) cumulative (i.e., days 1 to 34). Linear and quadratic statistical contrasts were evaluated. Health data were analyzed for differences in mortality and morbidity (% treated and retreated). By design, initial weight did not differ between treatments. No significant differences (P > 0.05) were observed for weight, ADG, DMI, or feed efficiency. Final weights were numerically greater for cattle fed RumeNext B (2.6 kg), Rumensin (2.0 kg), or the combination (3.1 kg) relative to cattle fed the control diet. The data suggests that botanical extract blends numerically improve average daily gain and feed efficiency in growing cattle.

**Table 15. Common Arrival Diet and Grower Diets Composition**

| **Treatment** | **Arrival Diet** | **Grow Diet** | **Grow Diet + Rumensin** |
|---|---|---|---|
| **Ingredients, As Fed % by weight** | | | |
| Mixed Grass Hay | 33.33 | ----- | ----- |
| Arrival Feed Product | 66.67 | ----- | ----- |
| Corn Grain Cracked | ----- | 4.85 | 4.85 |
| Corn Silage 50% Gr | ----- | 60.61 | 60.61 |
| Distillers Gr + Solubles | ----- | 9.36 | 9.36 |
| Soybean Hulls | ----- | 4.65 | 4.65 |
| Cottonseed Hulls | ----- | 4.65 | 4.65 |
| Supplement (see Table 16) | ----- | 4.65 | ----- |
| Rumensin | ----- | ----- | 4.65 |
| 18% Hay Pellet | ----- | 11.23 | 11.23 |
| Total | 100.00 | 100.00 | 100.00 |

**Table 16. Supplement Composition and Nutrient Analysis**

| **Ingredients, % by weight as fed** | |
|---|---|
| Solulac | 97.28 |
| Soy Oil | 2.00 |
| Eugenol + cinnamaldehyde(encapsulated) | 0.53 |
| Capsaicin (encapsulated) | 0.18 |
| Fenugreek flavoring agent (Covatec 571) | 0.01 |
| | |
| Total | 100.00 |

| **Table 17 Performance Results** | | | | | |
|---|---|---|---|---|---|
| **Extract, mg/d** | **0** | **400** | **0** | **400** | |
| **Rumensin, mg/d** | **0** | **0** | **200** | **200** | |

| **Treatment #** | **1** | **2** | **3** | **4** | **SE** |
|---|---|---|---|---|---|
| # of Pens | 4 | 4 | 4 | 4 | |
| # of Cattle | 40 | 40 | 40 | 40 | |
| | | | | | |

| **Weight, kg** | | | | | |
|---|---|---|---|---|---|
| Day 0 | 265.1 | 265.1 | 265.1 | 265.1 | |
| Day 6 | 275.3 | 276.1 | 277.5 | 277.7 | 7.07 |
| Day 13 | 285.1 | 285.9 | 287.6 | 285.8 | 6.67 |
| Day 34 | 324.5 | 327.1 | 326.5 | 327.6 | 7.07 |
| | | | | | |

| **Average Daily Gain, kg/hd/d** | | | | | |
|---|---|---|---|---|---|
| Day 1-6 | 1.70 | 1.84 | 2.08 | 2.09 | 0.30 |
| Day 7-13 | 1.40 | 1.39 | 1.43 | 1.16 | 0.27 |
| Day 14-34 | 1.87 | 1.97 | 1.85 | 1.99 | 0.10 |
| Day 1-34 | 1.75 | 1.83 | 1.81 | 1.84 | 0.10 |
| | | | | | |

| **Dry Matter Intake, kg/hd/d** | | | | | |
|---|---|---|---|---|---|
| Day 1-6 | 4.71 | 4.62 | 4.65 | 4.78 | 0.06 |
| Day 7-13 | 6.84 | 6.79 | 6.81 | 6.82 | 0.04 |
| Day 14-34 | 7.96 | 8.12 | 7.99 | 7.97 | 0.10 |
| Day 1-34 | 7.16 | 7.21 | 7.15 | 7.17 | 0.07 |
| | | | | | |

| **Gain/Feed, x 100** | | | | | |
|---|---|---|---|---|---|
| Day 1-6 | 36.10 | 40.04 | 44.52 | 43.53 | 6.25 |
| Day 7-13 | 20.46 | 20.38 | 21.08 | 17.07 | 3.95 |
| Day 14-34 | 23.53 | 24.20 | 23.20 | 24.93 | 1.15 |
| Day 1-34 | 24.40 | 25.31 | 25.23 | 25.60 | 1.38 |

### Example 6

In this example, the effect of feeding feed supplement comprising an encapsulated capsaicin product to ewes through breeding, gestation, and lactation was evaluated by lamb birth weight, number of lambs bom, lamb performance, and ewe reproductive performance.

Ewes were fed the farm's standard ration (control group) and fed with the same ration supplemented with 0.033 g/kg (30 g/ton) capsaicin product/feed (treatment group) based on the season of lambing. The capsaicin product included a blend of 97.68% dried distillers grains, 1.00% soy oil, and 1.32% capsicum. Table 18 contains the composition of the complete feed with a capsaicin blend-down product. The Fall-lambing ewes were offered the standard control diet through lambing until weaning. After lamb-weaning, weights were collected and ewes were switched to capsaicin treatment diets. The treatment diet was fed through breeding and gestation. Winter-lambing ewes were fed the standard control diet until approximately two weeks prior to anticipated lambing. The capsaicin treatment diet was fed through lambing, lactation, weaning, and subsequent gestation.

**TABLE 18. CAPSAICIN TREATMENT DIET**

| | **Trt 1** |
|---|---|
| **INGREDIENTS, DM%** | |
| Corn | 54.68 |
| 48% Soybean Meal | 17.48 |
| Soy Hulls | 17.36 |
| Molasses | 8.37 |
| Limestone | 1.43 |
| Bovatec | 0.04 |
| Ovine Mineral | 0.06 |
| Salt | 0.41 |
| Selenium 0.06% | 0.05 |
| Capsaicin Blend-Down | 0.12 |
| | |
| **TOTAL** | 100 |

**TABLE 19. PERFORMANCE DATA**

| **Lamb Performance Means from Treatment Groups** | | | | | |
|---|---|---|---|---|---|
| **Treatment** | **Control (n=34)** | **SE** | **Treatment (n=154)** | **SE** | **P<=** |
| Initial Weight, kg | 3.17 | 0.17 | 3.84 | 0.08 | 0.01 |
| Final Weight, kg | 20.15 | 0.90 | 23.89 | 0.36 | 0.01 |
| Total Gain, kg | 16.42 | 0.90 | 20.16 | 0.36 | 0.01 |
| ADG, kg/d | 0.28 | 0.02 | 0.37 | 0.01 | 0.01 |

**TABLE 20. REPRODUCTIVE DATA**

| **Ewe Reproductive Performance Means from Treatment Groups** | | | | | |
|---|---|---|---|---|---|
| **Treatment** | **Control (n=63)** | **SE** | **Treatment (n=91)** | **SE** | **P<=** |
| Lambing Interval (d) | 210.5 | 3.2 | 251.8 | 2.3 | 0.01 |
| Conception Rate (%) | 90.5% | | 96.7% | | 0.10 |
| Subsequent Lambing Rate (%) | 81.0% | | 86.8% | | 0.22 |

Lambs born to capsaicin fed ewes were larger at birth and gained more weight than lambs born to control diet fed ewes. Lambing interval was longer for ewes fed the capsaicin treatment diet, due to management decisions rather than effects. Conception rate and subsequent lambing rate were improved with the addition of capsaicin.

## Claims

1. Non-medical use of an animal feed composition comprising a capsaicin product or an animal feed supplement comprising a capsaicin product, for increasing lactation in a non-avian monogastric animal.

2. The non-medical use of claim 1, wherein the animal feed composition or feed supplement comprises an animal feed product selected from the group consisting of feed matter, a mineral, a vitamin, an amino acid, an antibiotic, a plant extract, a plant botanical, and combinations of any thereof.

3. The non-medical use of claim 1 or 2, wherein the non-avian monogastric animal is a gestating animal in one of an entire gestation period, at least a portion of a first 4 weeks of gestation, and at least a portion of a last 4 weeks of gestation, or a lactating animal.

4. The non-medical use of claim 1 or 2 for increasing further a performance, wherein the non-avian monogastric animal is a monotocous species and the performance is selected of at least one of decreasing weight loss of the non-avian monogastric animal during lactation, increasing weight gain in an offspring of the non-avian monogastric animal, reducing heat stress of the non-avian monogastric animal, reducing the length of time to return to estrus, and increasing survivability of the offspring of the non-avian monogastric animal, as compared to a gestating non-avian monogastric animal or lactating non-avian monogastric animal which is not fed the animal feed composition or animal feed supplement.

5. The non-medical use of claim 1 or 2 for increasing further a performance, wherein the non-avian monogastric animal is a polytocous species and the performance is selected of at least one of decreasing weight loss of the non-avian monogastric animal during lactation, increasing number of viable offspring in a litter of the non-avian monogastric animal, improving weight gain in the offspring of the non-avian monogastric animal, increasing total litter weaning weight, decreasing heat stress of the non-avian monogastric animal, reducing the length of time to return to estrus, and increasing survivability of the offspring of the non-avian monogastric animal, as compared to a gestating non-avian monogastric animal or lactating non-avian monogastric animal which is not fed the animal feed composition or animal feed supplement.

6. The non-medical use of claim 1 or 2, wherein the non-avian monogastric animal is (i) a gestating swine or lactating swine, in one of an entire gestation period, at least a portion of the first 4 weeks of gestation, at least a portion of the last 4 weeks of gestation, and at least a portion of a lactation period; or (ii) a lactating sow or a gestating sow.

7. The non-medical use of claim 1 or 2, wherein the non-avian monogastric animal is of a species selected from the group consisting of equines, porcines, felines, canines, and rabbits.

8. Non-medical use of an animal feed composition comprising a capsaicin product or an animal feed supplement comprising a capsaicin product, for increasing average daily gain in weight of an animal selected from the group constituting of a dairy cow, a lactating bovine, a steer calf, a pre-ruminant calf, and an ovine, as compared to an animal which is not fed the feed composition or the feed supplement.

9. Non-medical use of an animal feed composition comprising a capsaicin product or an animal feed supplement comprising a capsaicin product, for increasing milk production or for increasing milk fat content of milk of a lactating bovine, as compared to an animal which is not fed the feed composition or the feed supplement.

10. Non-medical use of an animal feed composition comprising a capsaicin product or an animal feed supplement comprising a capsaicin product, for increasing the weight of milk produced per day or for increasing milk fat content of milk of a dairy cow, as compared to an animal which is not fed the feed composition or the feed supplement.

11. Non-medical use of any one claims 8 to 10, wherein the food composition or freed supplement comprises an animal feed product selected from the group consisting of feed matter, a mineral, a vitamin, an amino acid, an antibiotic, a plant extract, a plant botanical, a sugar alcohol, and combinations of any thereof.

12. The non-medical use of claim 11, wherein the feed composition or feed supplement comprises a botanical compound selected from the group consisting of cinnamaldehyde, eugenol, and combinations thereof.

13. The non-medical use of any one of claims 1 to 12, wherein the feed composition or the feed supplement comprises from 0.0001 % to 1.0% by weight of the capsaicin product.

14. The non-medical use of any one claims 8 to 13, wherein the capsaicin product is fed to the animal in an amount of 15 mg/head/day to 45 mg/head/day.

15. The non-medical use of any one of claims 1 to 14, wherein the capsaicin product is a product selected from the group consisting of capsaicin, dihydrocapsaicin, capsaicinoids, vanilloids, capsicum, macerated hot peppers, ground hot peppers, hot pepper extract, capsaicin-containing plant materials, an encapsulated capsaicin product, a coated capsaicin product, and combinations of any thereof.

16. The non-medical use of any one of claims 1 to 15, wherein feed composition or the feed supplement is placed in a container configured for shipping; and/or indicia are associated with the feed composition or the feed supplement, wherein the indicia is capable of directing an end user on how to administer the feed composition or the feed supplement to the non-avian monogastric animal.

## Patentansprüche

1. Nichtmedizinische Verwendung einer Tierfutterzusammensetzung, die ein Capsaicin-Produkt umfasst, oder einer Tierfutterergänzung, die ein Capsaicin-Produkt umfasst, zur Erhöhung der Milchbildung bei einem nichtvogelartigen nichtwiederkäuenden Tier.

2. Nichtmedizinische Verwendung gemäß Anspruch 1, wobei die Tierfutterzusammensetzung oder Futterergänzung ein Tierfutterprodukt umfasst, das aus der Gruppe ausgewählt ist, die aus Futtermitteln, einem Mineralstoff, einem Vitamin, einer Aminosäure, einem Antibiotikum, einem Pflanzenextrakt, einem pflanzlichen Futterzusatz und Kombinationen davon besteht.

3. Nichtmedizinische Verwendung gemäß Anspruch 1 oder 2, wobei das nichtvogelartige nichtwiederkäuende Tier ein trächtiges Tier in einer Zeit ausgewählt aus der gesamten Tragezeit, wenigstens einem Teil der ersten 4 Wochen der Tragezeit und wenigstens einem Teil der letzten 4 Wochen der Tragezeit, oder ein säugendes Tier ist.

4. Nichtmedizinische Verwendung gemäß Anspruch 1 oder 2 zur weiteren Erhöhung einer Leistungsfähigkeit, wobei das nichtvogelartige nichtwiederkäuende Tier eine monotoke Spezies ist und die Leistungsfähigkeit aus wenigstens einem von einem reduzierten Gewichtsverlust des nichtvogelartigen nichtwiederkäuenden Tiers während der Säugezeit, einer erhöhten Gewichtszuwachs bei einem Nachkommen des nichtvogelartigen nichtwiederkäuenden Tiers, einer reduzierten Hitzebelastung des nichtvogelartigen nichtwiederkäuenden Tiers, einer reduzierten Zeitdauer bis zur Rückkehr des Oestrus und einer erhöhten Überlebensfähigkeit des Nachkommens des nichtvogelartigen nichtwiederkäuenden Tiers im Vergleich zu einem trächtigen nichtvogelartigen nichtwiederkäuenden Tier oder säugenden nichtvogelartigen nichtwiederkäuenden Tier, das nicht mit der Tierfutterzusammensetzung oder Futterergänzung gefüttert wird, ausgewählt ist.

5. Nichtmedizinische Verwendung gemäß Anspruch 1 oder 2 zur weiteren Erhöhung einer Leistungsfähigkeit, wobei das nichtvogelartige nichtwiederkäuende Tier eine polytoke Spezies ist und die Leistungsfähigkeit aus wenigstens einem von einem reduzierten Gewichtsverlust des nichtvogelartigen nichtwiederkäuenden Tiers während der Säugezeit, einer erhöhten Anzahl von lebensfähigen Nachkommen in einem Wurf des nichtvogelartigen nichtwiederkäuenden Tiers, einem verbesserten Gewichtszuwachs bei den Nachkommen des nichtvogelartigen nichtwiederkäuenden Tiers, einem erhöhten Absetzgewicht des gesamten Wurfs, einer reduzierten Hitzebelastung des nichtvogelartigen nichtwiederkäuenden Tiers, einer reduzierten Zeitdauer bis zur Rückkehr des Oestrus und einer erhöhten Überlebensfähigkeit der Nachkommen des nichtvogelartigen nichtwiederkäuenden Tiers im Vergleich zu einem trächtigen nichtvogelartigen nichtwiederkäuenden Tier oder säugenden nichtvogelartigen nichtwiederkäuenden Tier, das nicht mit der Tierfutterzusammensetzung oder Futterergänzung gefüttert wird, ausgewählt ist.

6. Nichtmedizinische Verwendung gemäß Anspruch 1 oder 2, wobei das nichtvogelartige nichtwiederkäuende Tier (i) ein laktierendes Schwein oder säugendes Schwein in einer Zeit ausgewählt aus der gesamten Tragezeit, wenigstens einem Teil der ersten 4 Wochen der Tragezeit und wenigstens einem Teil der letzten 4 Wochen der Tragezeit und wenigstens einem Teil der Säugezeit oder (ii) eine säugende Sau oder eine trächtige Sau ist.

7. Nichtmedizinische Verwendung gemäß Anspruch 1 oder 2, wobei das nichtvogelartige nichtwiederkäuende Tier eine Spezies ist, die aus der Gruppe ausgewählt ist, die aus Pferden, Schweinen, Katzen, Hunden und Kaninchen besteht.

8. Nichtmedizinische Verwendung einer Tierfutterzusammensetzung, die ein Capsaicin-Produkt umfasst, oder einer Tierfutterergänzung, die ein Capsaicin-Produkt umfasst, zur Erhöhung der durchschnittlichen täglichen Gewichtszunahme eines Tiers, das aus der Gruppe ausgewählt ist, die aus einer Milchkuh, einem laktierenden Rind, einem Stierkalb, einem präruminanten Kalb und einem Schaf besteht, im Vergleich zu einem Tier, das nicht mit der Tierfutterzusammensetzung oder Futterergänzung gefüttert wird.

9. Nichtmedizinische Verwendung einer Tierfutterzusammensetzung, die ein Capsaicin-Produkt umfasst, oder einer Tierfutterergänzung, die ein Capsaicin-Produkt umfasst, zur Erhöhung der Milchproduktion oder zur Erhöhung des Milchfettgehalts von Milch eines säugenden Rinds im Vergleich zu einem Tier, das nicht mit der Tierfutterzusammensetzung oder Futterergänzung gefüttert wird.

10. Nichtmedizinische Verwendung einer Tierfutterzusammensetzung, die ein Capsaicin-Produkt umfasst, oder einer Tierfutterergänzung, die ein Capsaicin-Produkt umfasst, zur Erhöhung des Gewichts der pro Tag produzierten Milch oder zur Erhöhung des Milchfettgehalts von Milch einer Milchkuh im Vergleich zu einem Tier, das nicht mit der Tierfutterzusammensetzung oder Futterergänzung gefüttert wird.

11. Nichtmedizinische Verwendung gemäß einem der Ansprüche 8 bis 10, wobei die Futterzusammensetzung oder Futterergänzung ein Tierfutterprodukt umfasst, das aus der Gruppe ausgewählt ist, die aus Futtermitteln, einem Mineralstoff, einem Vitamin, einer Aminosäure, einem Antibiotikum, einem Pflanzenextrakt, einem pflanzlichen Futterzusatz, einem Zuckeralkohol und Kombinationen davon besteht.

12. Nichtmedizinische Verwendung gemäß Anspruch 11, wobei die Futterzusammensetzung oder Futterergänzung eine pflanzliche Verbindung umfasst, die aus der Gruppe ausgewählt ist, die aus Zimtaldehyd, Eugenol und Kombinationen davon besteht.

13. Nichtmedizinische Verwendung gemäß einem der Ansprüche 1 bis 12, wobei die Futterzusammensetzung oder Futterergänzung 0,0001 bis 1,0 Gew.-% des Capsaicin-Produkts umfasst.

14. Nichtmedizinische Verwendung gemäß einem der Ansprüche 8 bis 13, wobei das Capsaicin-Produkt in einer Menge von 15 mg/Kopf/Tag bis 45 mg/Kopf/Tag an das Tier verfüttert wird.

15. Nichtmedizinische Verwendung gemäß einem der Ansprüche 1 bis 14, wobei das Capsaicin-Produkt ein Produkt ist, das aus der Gruppe ausgewählt ist, die aus Capsaicin, Dihydrocapsaicin, Capsaicinoiden, Vanilloiden, Capsicum, mazerierten Pfefferschoten, gemahlenen Pfefferschoten, Pfefferextrakt, capsaicinhaltigen Pflanzenmaterialien, einem eingekapselten Capsaicin-Produkt, einem beschichteten Capsaicin-Produkt und Kombinationen davon besteht.

16. Nichtmedizinische Verwendung gemäß einem der Ansprüche 1 bis 15, wobei die Futterzusammensetzung oder Futterergänzung in einen Frachtcontainer gebracht wird und/oder Hinweise mit der Futterzusammensetzung oder Futterergänzung verbunden sind, wobei die Hinweise einen Endverbraucher anleiten können, wie man dem nichtvogelartigen nichtwiederkäuenden Tier die Futterzusammensetzung oder Futterergänzung verabreicht.

## Revendications

1. Utilisation non médicale d'une composition d'alimentation animale comprenant un produit de capsaïcine ou un complément d'alimentation animale comprenant un produit de capsaïcine, pour augmenter la lactation chez un animal monogastrique non aviaire.

2. Utilisation non médicale selon la revendication 1, dans laquelle la composition d'alimentation animale ou le complément d'alimentation comprend un produit d'alimentation animale choisi dans le groupe consistant en une matière d'alimentation, un minéral, une vitamine, un acide aminé, un antibiotique, un extrait de plante, un insecticide extrait de plante, et des combinaisons de l'un quelconque d'entre eux.

3. Utilisation non médicale selon la revendication 1 ou 2, dans laquelle l'animal monogastrique non aviaire est un animal en gestation dans l'une parmi une période de gestation entière, au moins une partie des 4 premières semaines de gestation, et au moins une partie des 4 dernières semaines de gestation, ou un animal en lactation.

4. Utilisation non médicale selon la revendication 1 ou 2, pour augmenter plus encore une performance, dans laquelle l'animal monogastrique non aviaire est une espèce monotoque et la performance est choisie parmi au moins l'une de la diminution de perte de poids de l'animal monogastrique non aviaire pendant la lactation, de l'augmentation de la prise de poids chez une progéniture de l'animal monogastrique non aviaire, de la réduction du stress thermique de l'animal monogastrique non aviaire, de la réduction de la durée jusqu'au retour à l'oestrus, et de l'augmentation de la capacité de survie de la progéniture de l'animal monogastrique non aviaire, en comparaison à un animal monogastrique non aviaire en gestation ou un animal monogastrique non aviaire en lactation qui n'est pas alimenté par la composition d'alimentation animale ou le complément d'alimentation animale.

5. Utilisation non médicale selon la revendication 1 ou 2, pour augmenter plus encore une performance, dans laquelle l'animal monogastrique non aviaire est une espèce polytoque et la performance est choisie parmi au moins l'une de la diminution de perte de poids de l'animal monogastrique non aviaire pendant la lactation, de l'augmentation du nombre de progénitures viables dans une portée de l'animal monogastrique non aviaire, de l'amélioration de la prise de poids chez la progéniture de l'animal monogastrique non aviaire, de l'augmentation du poids total au sevrage de la portée, de la diminution du stress thermique de l'animal monogastrique non aviaire, de la réduction de la durée jusqu'au retour l'oestrus, et de l'augmentation de la capacité de survie de la progéniture de l'animal monogastrique non aviaire, en comparaison à un animal monogastrique non aviaire en gestation ou un animal monogastrique non aviaire en lactation qui n'est pas alimenté par la composition d'alimentation animale ou le complément d'alimentation animale.

6. Utilisation non médicale selon la revendication 1 ou 2, dans laquelle l'animal monogastrique non aviaire est (i) un porc en gestation ou un porc en lactation, dans l'une parmi une période de gestation entière, au moins une partie des 4 premières semaines de gestation, au moins une partie des 4 dernières semaines de gestation, et au moins une partie d'une période de lactation ; ou (ii) une truie en lactation ou une truie en gestation.

7. Utilisation non médicale selon la revendication 1 ou 2, dans laquelle l'animal monogastrique non aviaire est d'une espèce choisie dans le groupe consistant en les équidés, les porcins, les félins, les canidés et les lapins.

8. Utilisation non médicale d'une composition d'alimentation animale comprenant un produit de capsaïcine ou un complément d'alimentation animale comprenant un produit de capsaïcine, pour augmenter la prise moyenne quotidienne de poids chez un animal choisi dans le groupe constitué d'une vache laitière, d'un bovin en lactation, d'un veau mâle châtré, d'un veau préruminant, et d'un ovin, en comparaison à un animal qui n'est pas alimenté par la composition d'alimentation ou le complément d'alimentation.

9. Utilisation non médicale d'une composition d'alimentation animale comprenant un produit de capsaïcine ou un complément d'alimentation animale comprenant un produit de capsaïcine, pour augmenter la production de lait ou pour augmenter la teneur en matière grasse du lait d'un bovin en lactation, en comparaison à un animal qui n'est pas alimenté par la composition d'alimentation ou le complément d'alimentation.

10. Utilisation non médicale d'une composition d'alimentation animale comprenant un produit de capsaïcine ou un complément d'alimentation animale comprenant un produit de capsaïcine, pour augmenter le poids de lait produit par jour ou pour augmenter la teneur en matière grasse du lait d'une vache laitière, en comparaison à un animal qui n'est pas alimenté par la composition d'alimentation ou le complément d'alimentation.

11. Utilisation non médicale selon l'une quelconque des revendications 8 à 10, dans laquelle la composition alimentaire ou le complément d'alimentation comprend un produit d'alimentation animale choisi dans le groupe consistant en une matière d'alimentation, un minéral, une vitamine, un acide aminé, un antibiotique, un extrait de plante, un insecticide extrait de plante, un alcool de sucre, et des combinaisons de l'un quelconque d'entre eux.

12. Utilisation non médicale selon la revendication 11, dans laquelle la composition d'alimentation ou le complément d'alimentation comprend un composé botanique choisi dans le groupe consistant en le cinnamaldéhyde, l'eugénol, et leurs combinaisons.

13. Utilisation non médicale selon l'une quelconque des revendications 1 à 12, dans laquelle la composition d'alimentation ou le complément d'alimentation comprend de 0,0001 % à 1,0 % en poids du produit de capsaïcine.

14. Utilisation non médicale selon l'une quelconque des revendications 8 à 13, dans laquelle le produit de capsaïcine est donné à l'animal dans une quantité de 15 mg/tête/jour à 45 mg/tête/jour.

15. Utilisation non médicale selon l'une quelconque des revendications 1 à 14, dans laquelle le produit de capsaïcine est un produit choisi dans le groupe consistant en la capsaïcine, la dihydrocapsaïcine, des capsaïnoïdes, des vanilloïdes, du capsicum, des piments de Cayenne macérés, des piments de Cayenne moulus, de l'extrait de piment de Cayenne, des matières végétales contenant de la capsaïcine, un produit de capsaïcine encapsulé, un produit de capsaïcine revêtu, et l'une quelconque de leurs combinaisons.

16. Utilisation non médicale selon l'une quelconque des revendications 1 à 15, dans laquelle la composition d'alimentation ou le complément d'alimentation est placé dans un contenant configuré pour une expédition ; et/ou des instructions sont associées à la composition d'alimentation ou au complément d'alimentation, dans laquelle les instructions sont aptes à diriger un utilisateur final quant à la manière d'administrer la composition d'alimentation ou le complément d'alimentation à l'animal monogastrique non aviaire.
